# EUROPEAN PATENT APPLICATION

(11) **EP 1 669 520 A1**
(43) Date of publication of application: **14.06.2006**
(21) Application number: 04773217.7
(22) Date of filing: 10.09.2004
(51) Int. Cl.: E05B 1/00, E05B 49/00, B60R 25/00, B60R 25/10

(54) **DOOR HANDLE DEVICE AND KEYLESS ENTRY DEVICE HAVING THE SAME**

(30) Priority: 26.09.2003 JP 2003334874; 02.09.2004 JP 2004255224
(71) Applicant: MATSUSHITA ELECTRIC INDUSTRIAL CO., LTD., Kadoma-shi, Osaka 571-8501 (JP)
(72) Inventor: OGINO, Hiroyuki, Osaka 571-8501 (JP); UEDA, Shigeki, Osaka 571-8501 (JP); KANEKO, Hideki, Osaka 571-8501 (JP); INUI, Hirofumi, Osaka571-8501 (JP)
(74) Representative: Pfau, Anton Konrad
(86) International application number: PCT/JP2004/013573
(87) International publication number: WO 2005/031092

(57) **Abstract**

A subject of the present invention is to provide a door handle device capable of controlling its opening/closing action by using a piezoelectric sensor that has a flexible structure and can attain an enough sensitivity even by a light touch, and a keyless entry system having the same.

A door handle device (100) that is able to open a lock of a door locking means, which is provided to a door (13) with a handle (11) used for an opening/closing operation to lock an opening operation of the door (13), by an operation of the handle, includes a piezoelectric sensor (15) formed of a piezoelectric element fitted to the handle (11) and having a flexibility, and a controlling portion for receiving a sensed signal of the piezoelectric sensor (15) generated by a touch on the handle (11) to open the lock of the door locking means.

## Description

### <Technical Field>

The present invention relates to a handle device capable of controlling an opening/closing operation by sensing an operation of the handle device by means of a sensor provided to the handle device such as a door handle, or the like, and a keyless entry system having the same.

Also, the present invention relates to a door opening/closing device suitable for a keyless entry system that makes it possible to lock/unlock a door of a vehicle such as a car, or the like without a key operation, and is used for a vehicle door, a building door, or the like.

### <Background Art>

In unlocking the door lock by operating the door handle of the vehicle, a sensor for sensing a touch or an operation of the handle is provided to the door handle and then a function of unlocking the door lock under predetermined conditions when a sensed signal is output from this sensor is provided.

For example, the vehicle door handle device for unlocking the door lock by using a contact-connecting switch such as a membrane switch, or the like in the sensor is disclosed in Patent Literature 1. This membrane switch has a well-known structure, and a pair of electrode portions arranged at a predetermined interval are printed on opposing inner surfaces of a pair of flexible film-like plates that are arranged to oppose to each other via spacers. This membrane switch is normally in its OFF state. When the elastic body such as the silicon rubber, or the like, which put on one plate to be positioned on the electrode portion, is pushed by the trigger, the electrode portions come into touch with each other and thus the switch is brought into its ON state.

Also, the human-body approach sensor for use in the car to unlock the door lock by using an electrical capacitance sensor as a sensor is disclosed in Patent Literature 2. The outer handle using a human-body approach sensor for a car is formed to have a hollow shape. Parallel cables constituting the electrical capacitance sensor as a non-contact sensor are provided through the hollow portion to extend along the longitudinal direction of a grip portion of the outer handle. The parallel cables are coupled to a shielding wire whose base end portion is provided to extend to the outside via an opening provided near a pivot portion of the outer handle, and the other end of the shielding wire is connected to a circuit substrate.

Meanwhile, in contrast to the normal door lock opening method that unlocks a door lock by inserting a key into a keyhole of the door handle, recently the so-called keyless entry system for unlocking a door lock by not inserting a key into a keyhole but using a personal authentication card, a transmitter, or the like is applied to the door of the car, the housing, and the like. The vehicle radio lock device of this type is disclosed in Patent Literature 3. In this vehicle radio lock device, a control portion is operated when the door handle of the vehicle is pulled, while a mobile transceiver is brought into its transmitting state when this lock device receives a transmission/ reception code from a transceiver on the vehicle side, and then the control portion executes a unlocking process based on a proper code sent from the mobile transceiver. Then, a sensing means for sensing that the door handle is pulled is provided, and the transceiver on the vehicle side sends out the transmission/reception code based on a sensed signal from this sensing means.
(Patent Literature 1) JP-A-2002-322834
(Patent Literature 2) JP-A-10-308149
(Patent Literature 3) JP-A-8-53964

However, the contact-connecting switch used in the door handle device in the prior art has such a disadvantage that the switch is not operated by a light touch such as a mere contact, or the like. Also, since a stroke is needed to connect the contacts, a time difference occurs inevitably between a moment at which the switch is touched and a moment at which the switch starts to operate, which acts as a factor to make a response worse. For example, in case the door is opened sharply by gripping and pulling the door handle, either the locking state is still kept or the rattling is caused because the unlocking of the locking means is not enough. Therefore, the user must wait a predetermined time after he or she grips the door handle and then pull the door handle, which has an adverse effect on an operation feeling.

In contrast, the electrical capacitance sensor is easily influenced by the disturbance because the electrodes must be provided on the surface in construction, and thus the noise is ready to enter into the sensor. Also, since an electrostatic capacity is different according to the person and also is changed by the shoe being put on, the sensor had the problem that a sensitivity control is extremely difficult. Therefore, a frequency of occurrence of a malfunction is high and thus this sensor has not been put to practical use yet.

As the switch that can enhance a sensitivity and separate a noise component and that can be switched ON/OFF while having the touch feel that can respond to even a light touch, preferably the piezoelectric sensor should be employed.

However, the normal piezoelectric sensor is the rigid body that is constructed by aligning the piezoelectric elements made of the ceramics, or the like. When there is a restriction on the space of the sensor arrangement, such a problem exists that the piezoelectric sensor cannot be arranged and fitted in the desired location.

Also, it may be considered that the optical sensor should be employed as the non-contact type. But a malfunction is often caused due to dusts adhered to the sensor, weather conditions such as a rain, a snow, and the like, etc., and such sensor is not the practical one.

Under such circumstances, in the door handle device using the contact-connecting switch, the electrostatic switch, the normal piezoelectric sensor, or the optical sensor and the keyless entry system equipped with any of these door handle devices, it becomes difficult to achieve favorable operation feeling, operational reliability, and fitting performance.

The present invention has been made in view of the above circumstances, and aims at providing a door handle device capable of controlling an opening/closing operation by using a piezoelectric sensor, which has a flexible structure and shows an enough sensitivity even to a light touch, and a keyless entry system equipped with this device and consequently achieving improvements in the operation feeling, the operational reliability, and the fitting performance.

Also, recently the vehicles such as the car, and the like, which is equipped with the keyless entry system for the purpose of improving the convenience and the security, are increasing.

The keyless entry system gives such a system that can lock/unlock the door without key operation. The door is locked/ unlocked by collating password data, or the like mutually between a radio communication terminal that the driver carries on and possesses and an onboard radio communication terminal via radio communication.

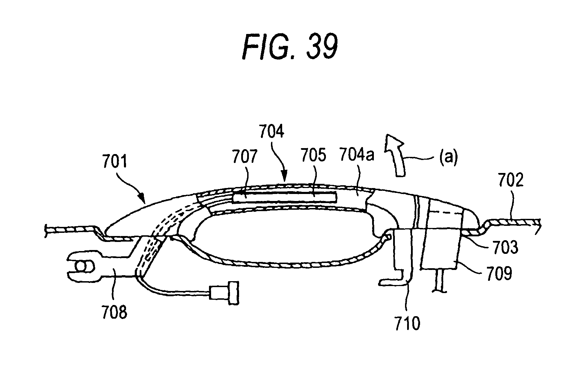

In the prior art, as such keyless entry system, the door handle for the car as the vehicle shown in Fig.39 has been proposed.

In a door handle 701, a handle main body 704 that is fitted into an opening portion 703 of a door 702 of the car and acts as a grip portion used to open/close the door is constructed to have a hollow structure. Then, a handle operation sensor 705 is built in a hollow portion 704a in the handle main body 704.

Then, from the fact that the electrostatic capacity around the handle main body 704 is varied owing to the touch with the human body when the driver, or the like touches his or her fingers to the handle main body 704, the handle operation sensor 705 can sense whether or not the opening/closing operation of the door was taken, based on a variation of the electrostatic capacity. Thus, this sensor is constructed to have a sensor electrode 706 for sensing a variation of the electrostatic capacity, and an antenna 707 for transmitting/receiving a signal to/from the radio communication terminal that the driver carries on and possesses when a predetermined variation or more in the electrostatic capacity is sensed by this sensor electrode 706 (see Patent Literature 1, for example).

In this case, an arm 708 extended from the front portion to swing in the direction indicated with the arrow (a) is coupled to the door side of the handle main body 704. Also, a key cylinder 709 and a bell crank member 710, which lock the door 702 from the outer side not to open by itself, are provided to the rear side of the handle main body 704. Then, the bell crank member 710 when cooperates with a link mechanism (not shown) constitutes the door lock device.

However, the hollow portion 704a having a predetermined size or more and used to insert the handle operation sensor 705 must be ensured in the handle main body 704 of the door handle 701. Therefore, there existed the problem that a shape and a dimension of the handle main body 704 are restricted.

Also, the electrostatic capacity around the handle main body 704 is infinitesimally varied by an approach or a touch of the article except the human body, for example.

Hence, in case a sensitivity of the electrical capacitance type handle operation sensor 705 is set previously on the lower side not to erroneously sense an infinitesimal variation of the electrostatic capacity due to such disturbance, it cannot be sensed whether or not the opening/closing operation of the door 702 was carried out when a contact pressure of the figures to the handle main body 704 in the opening/closing operation of the door 702 is small. Thus, the touch of the figures to the handle main body 704 is required once again, so that there is a possibility that a reduction of the operability is brought about.

In contrast, in case a sensitivity of the handle operation sensor 705 is increased, it can be sensed without fail whether or not the opening/closing operation of the door 702 was taken even though a contact pressure of the fingers to the handle main body 704 in opening/closing the door 702 is small. But the handle operation sensor 705 decides a minute variation in the electrostatic capacity caused by the disturbance as the event that the opening/closing operation of the door 702 was taken and sends out a signal, so that it is possible that a meaningless signal sending-out emits the noise to the surrounding environment.

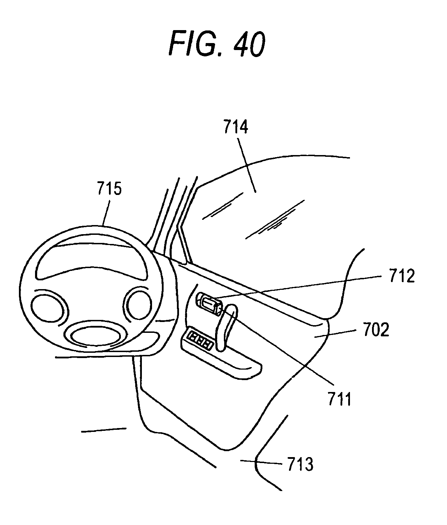

Also, as shown in Fig.40, a door lock knob 711 for locking a door lock system (not shown) from the interior side is provided to the door of the car such that the door 702 does not open by itself during the running. Therefore, when the driver gets off of the vehicle, first he or she executes the unlocking operation of the door lock knob 711, and then opens the door 702 outward by operating an inner door handle 712 while releasing a door latching means (not shown) constructed as an L-shaped hook, which is latched releasably on a U-shaped receiver provided to a car main body 713, (referred to as the "release" hereinafter).

Of course, when the driver opens the door 702 from the outside and gets on the car, he or she opens the lock of the door latching means by inserting a key into a key cylinder (not shown) and turning the key, or the like and then opens the door 702 outward by operating the outer door handle while releasing the door latching means. In Fig.40, 714 denotes a window glass and 715 denotes a steering wheel.

As described above, since the door of the car is opened from either of the outside and the inside, normally the driver opens the door by unlocking the lock when the door locking system locks the door and then operating the inner door handle or the outer door handle while releasing the door latching means that is latched on the car main body. Therefore, a timing at which at least the unlocking of the door locking system is completed is best to execute the door opening operation until the operation of releasing the door locking system by the inner door handle or the outer door handle is finished.

In the prior art, from such viewpoint of the door opening/closing operation of the car, the technology regarding the handle operation sensor used in the door opening/closing operation taken from the interior side is not disclosed at all. Also, such a situation may be considered that, if the door opening/closing operation taken from the interior side is to be sensed, the handle operation sensor should be provided in the inner door handle like the configuration that such sensor is provided to the outer handle main body. In this case, a size of the inner door handle is increase, and thus it may be predicted that the design is subject to various constraints such that a wide fitting space is needed, and the like.

Also, as described above, such a situation may be supposed that, when sensing of the door opening operation by the handle operation sensor 705 may be varied according to a way of gripping of the handle main body 704, the unlocking operation of the door locking system is delayed irrespective of the releasing operation of the door latching means executed by opening the handle main body. At this time, the door opening operation of the handle main body 704 must be executed again at a different timing, so that it may be considered that a reduction of the operability is brought about.

Further, as explained in Fig.40, in order to open the door, the unlocking operation of the door lock is executed and then the door latching means must be released by operating the door handle. Thus, the two-stage operation is needed and the door opening/closing operation becomes troublesome.
(Patent Literature 4) JP-A-2003-194959

In view of the problems in the prior art, a subject that the present invention is going to overcome is to provide a door opening/closing device that is capable of opening or opening/ shutting a door lock simultaneously with a door opening operation or a door opening/closing operation applied from the outer side and the inner side.

### <Disclosure of the Invention>

In order to achieve the above object, a door handle device set forth in claim 1 according to the present invention that is able to open a lock of a door locking means, which is provided to a door with a handle used for an opening/closing operation to lock an opening operation of the door, by an operation of the handle, includes a piezoelectric sensor formed of a piezoelectric element fitted to the handle and having a flexibility; and a controlling portion for receiving a sensed signal of the piezoelectric sensor generated by a touch on the handle to open the lock of the door locking means.

According to this door handle device, the piezoelectric sensor can be attached to the handle as the cable with the flexibility, and the vibration acting on the handle can be sensed with high sensitivity. Therefore, an enough signal output can be obtained when the operator simply touches the handle, and a touch onto the handle can be sensed. Also, it is not needed to provide the electrodes on the surface, and thus the sensor is hardly influenced by the disturbance, attached dusts, rain, snow, etc. In addition, because the piezoelectric sensor can be deformed flexibly, constraint conditions of a fitting space can be lessened and a fitting space can be reduced.

In the door handle device set forth in claim 2, the handle has a handle main body one end side of which is supported swingably to the door via a supporting shaft and other end side of which is moved in a pulling out direction by a swing of one end side, and the piezoelectric sensor is arranged on a surface of the handle main body opposing to the door to sense a vibration generated by a gripping operation of the handle main body.

According to this door handle device, because the piezoelectric sensor is arranged on the surface of the handle main body opposing to the door, the operator can touch directly the piezoelectric sensor with a high probability when the hand is inserted between the door and the handle main body and the handle main body is grasped by the fingers, whereby a sensitivity of the gripping action can be enhanced.

In the door handle device set forth in claim 3, the handle has a handle main body one end side of which is supported swingably to the door via a supporting shaft and other end side of which is moved in a pulling-out direction by a swing of one end side, and the piezoelectric sensor is bridged between the door and other end side of the handle main body to sense a vibration generated by a pulling operation of the handle main body.

According to this door handle device, one end side of the handle is supported swingably on the door via the supporting shaft, and the other end side of the handle main body is moved in the pulling direction when the handle is gripped and pulled. Therefore, since the piezoelectric sensor is bridged to extend between the door and the other end side of the handle main body, a distortion is ready to occur by a tension in the piezoelectric sensor by the pulling operation of the handle main body and also a sensitivity can be enhanced.

In the door handle device set forth in claim 4, the handle has a handle main body one end side of which is supported swingably to the door via a supporting shaft and other end side of which is moved in a pulling-out direction by a swing of one end side, and the piezoelectric sensor is arranged in vicinity of the supporting shaft of the handle main body to sense a vibration generated by a swing operation of the handle main body.

According to this door handle device, since the piezoelectric sensor is arranged in vicinity of the supporting shaft, the piezoelectric sensor being bent around the supporting shaft is brought into touch with the supporting shaft when the handle main body is swung around the supporting shaft. Thus, the vibration generated by this touch is sensed and a sensitivity can be enhanced.

In the door handle device set forth in claim 5, the handle has a handle main body one end side of which is supported swingably to the door via a supporting shaft and other end side of which is moved in a pulling-out direction by a swing of one end side, and the piezoelectric sensor is bridges between the door and one end side of the handle main body to contact the supporting shaft and a top end of the piezoelectric sensor is inserted into an insertion hole formed in the handle main body as a free end.

According to this door handle device, when the handle main body is swung, the piezoelectric sensor is brought into touch with the supporting shaft and also the top end of the piezoelectric sensor held in the handle main body is rubbed against the inner wall of the insertion hole. Thus, the operation of the handle main body can be sensed over a long distance of the piezoelectric sensor with high sensitivity. Also, in this door handle device, because the top end of the piezoelectric sensor is held in the insertion hole as the free end, a time-dependent fatigue is hard to occur in the piezoelectric sensor and thus a lifetime enhancement of the piezoelectric sensor can be attained.

In the door handle device set forth in claim 6, the handle is a door-integrated handle having a handle main body both ends of which are fixed to the door.

According to this door handle device, because the handle main body is constructed as the door-integrated handle having no movable portion, the piezoelectric sensor is not directly deformed by the operation of the handle main body but the handle operation is sensed only by the vibration that is propagated from the handle main body. In the case of this door handle device, the time-dependent fatigue is hard to occur in the piezoelectric sensor and thus the lifetime enhancement of the piezoelectric sensor can be attained.

In the door handle device set forth in claim 7, the piezoelectric sensor is provided in an inside of the handle main body.

According to this door handle device, the piezoelectric sensor is provided to the inside of the handle main body. Therefore, the piezoelectric sensor is covered with a casing of the handle main body, and the piezoelectric sensor can be protected from an impact applied by other materials and a time-dependent wear generated by the hand contacted at a time of operation.

In the door handle device set forth in claim 8, the piezoelectric sensor is provided along an inner surface of the handle main body.

According to this door handle device, the piezoelectric sensor provided to the inside of the handle main body is provided along an inner surface of the casing of the handle main body, so that the vibration generated by a gripping operation of the handle main body is ready to propagate through the sensor.

In the door handle device set forth in claim 9, the handle is arranged in a position that is hidden behind an outer surface of the door when the door locking means is shut and is exposed when the door locking means is opened.

According to this door handle device, the handle used to open/close the door is arranged on the cut-end portion of the door, for example, and is not exposed to the outer surface in a state that the door is closed. In the handle being hidden behind the door outer surface, the piezoelectric sensor senses the vibration generated by a rapping action on the door outer surface, or the like, for example. Therefore, when the piezoelectric sensor senses the vibration in a situation that the handle is hidden and then the lock of the door locking means is opened by the control portion, the door is opened up to its half-opened state and then the door can be fully opened by the exposed handle. According to this door handle device, the handle main body can be hidden behind the door outer surface in the personal location that only the operator knows.

A keyless entry system set forth in claim 10 according to the present invention, includes the door handle device set forth in any one of claim 1 to claim 9; a vehicle-side transmitter/receiver mounted on a vehicle side; a mobile-side transmitter/receiver carried with an operator; and a controlling portion for opening a door lock when the mobile-side transmitter/receiver receives a password request signal that the vehicle-side transmitter/receiver transmits and then the vehicle-side transmitter/receiver receives a password signal that the mobile-side transmitter/receiver transmits; wherein the control portion includes a password signal requesting means for receiving a sensed signal of the piezoelectric sensor to cause the vehicle-side transmitter/receiver to transmit the password request signal, a password signal deciding means for deciding whether or not the password signal received by the vehicle-side transmitter/receiver and decrypted coincides with a normal signal set previously, and a lock open instructing means for instructing the door locking means to open the lock when the password signal coincides with the normal signal.

According to the keyless entry system, the door handle device that can execute a high-sensitivity detection, that is hard to subject to the disturbance caused due to the exposure of the electrodes, and that has few constraint conditions of the installation location is equipped as the major constituent member. Since the door handle device can be operated only by a light touch on the handle and no stroke is needed to joint the contacts, there exists no time difference between a moment at which the operator touches the handle and a moment at which the switch starts to operate. As a result, a time required until the lock open instructing means of the control circuit instructs the door locking means to open the lock after the operator touches the handle can be reduced substantially, and also the door locking means can be opened in response to the rapid door opening.

A keyless entry system set forth in claim 11 according to the present invention, includes the door handle device set forth in any one of claim 1 to claim 9; wherein the control portion includes a password signal inputting means for receiving a touch detect signal from the piezoelectric sensor to standby an input of a password signal, a password signal deciding means for deciding whether or not the password signal input into the password signal inputting means from the piezoelectric sensor and decrypted coincides with a normal signal set previously, and a lock open instructing means for instructing the door locking means to open the lock when the password signal coincides with the normal signal.

According to this keyless entry system, when the piezoelectric sensor of the door handle device provided to the door senses the vibration generated by the door opening operation, the control circuit brings the password signal inputting means into its input standby state, and the password signal can be input in this input standby state in response to the vibration sensed by the door handle device. When the password signal obtained by the input vibration is the normal signal, the lock open instructing means instructs the door locking means to open the lock. Therefore, when only the door handle device is provided to the door, the vehicle-side transmitter/receiver and the mobile-side transmitter/receiver are not needed.

In the keyless entry system set forth in claim 12, the password signal is set based on a peak intensity and a peak interval of a vibration waveform generated by a rapping operation in a predetermined rhythm.

According to this keyless entry system, when the operator raps the handle main body at a predetermined interval in a predetermined number of times, this vibration waveform is decrypted by the control portion. Then, the door locking means is opened by the control portion when this rapping action (rhythm) corresponds to a predetermined action. That is, the peculiar rapping rhythm that only the operator knows constitutes the password signal.

In the keyless entry system set forth in claim 13, the password signal is set based on a peak intensity and a peak interval of a pressure change waveform generated by a variation of a gripping pressure.

According to this keyless entry system, when the operator grips the handle main body at a predetermined interval in a predetermined number of times, this waveform is decrypted by the control portion. Then, the door locking means is opened by the control portion when this gripping action corresponds to a predetermined action. That is, the peculiar gripping rhythm that only the operator knows constitutes the password signal.

The keyless entry system set forth in claim 14 further includes a disturbance sensor for sensing signal components except a signal as a sensed object out of a sensed signal of the piezoelectric sensor.

According to this keyless entry system, even when the vibration caused by the disturbance acts on the door, a sensitivity of the vibration generated by the handle operation can be increased. That is, the vibration generated by the disturbance such as the idling, or the like, for example, as well as the vibration generated by the handle operation is sensed by the piezoelectric sensor. In this case, the vibration generated by the disturbance is sensed by the disturbance sensor provided to the door, and then this vibration generated by the disturbance is subtracted from the vibration sensed by the piezoelectric sensor. Therefore, the noise generated by the disturbance can be eliminated, so that a sensitivity of the vibration of the handle operation can be increased.

According to the door handle device of the present invention, the piezoelectric sensor with the flexibility is attached to the handle, and the lock of the door locking means is opened by receiving a sensed signal of the piezoelectric sensor. Therefore, an enough signal output can be obtained when the operator simply touches the handle, and a touch on the handle can be sensed with high sensitivity. Also, the sensor is hardly influenced by the disturbance caused due to the exposure of the electrode, attached dusts, rain, snow, etc. In addition, because the piezoelectric sensor can be deformed flexibly, constraint conditions of a fitting space can be lessened and the fitting space can be reduced. As a result, the operation feeling, the operational reliability, and the fitting performance can be improved considerably in contrast to the door handle device in the prior art.

According to the keyless entry system of the present invention, the door handle device that can execute a high- sensitivity detection, that is hard to subject to the disturbance caused due to the exposure of the electrodes, and that has few constraint conditions of the installation location is equipped as the major constituent member. Therefore, since the door handle device can be operated only by a light touch on the handle and no stroke is needed to joint the contacts, there exists no time difference between a moment at which the operator touches the handle and a moment at which the switch starts to operate. As a result, a time required until the lock open instructing means of the control circuit instructs the door locking means to open the lock after the operator touches the handle can be reduced substantially, and also the open of the door locking means can respond sufficiently to the rapid door opening. As a result, it is not required for the operator to wait for a predetermined time while grasping the door handle and thus an operation feeling can be improved.

Also, the present invention provides a door opening/ closing device includes an outer door handle and an inner door handle gripped in a door opening/closing operation; a door locking means for locking a door not to be opened from a main body on which the door is closed; a door latching means for latching the door releasably from the main body; a door latch release operating means for releasing a latch of the door latching means in cooperation with an operation that is applied from an outer side or an inner side to open the door; a door latch release signal sensing means for generating a signal in response to an operation of the door latch release operating means; and a main body-side controlling means for controlling an open of the door locking means by a sensed signal of the door latch release signal sensing means.

Also, the present invention provides a door opening/ closing device includes an outer door handle and an inner door handle gripped in a door opening/closing operation; a door locking means for locking a door not to be opened; a door latching means for latching the door releasably from a main body; a door latch release/set operating means for releasing and setting the door latching means in cooperation with an operation that is applied from an outer side or an inner side to open/close the door; a door latch release/set signal sensing means for generating a signal in response to an operation of the door latch release/set operating means; and a main body-side controlling means for controlling an open and a shut of the door locking means by a sensed signal of the door latch release/set signal sensing means.

Accordingly, the door lock can be opened or opened/closed simultaneously with the door opening operation or the door opening/closing operation applied from either of the outer side and the inner side, so that the door opening operation or the door opening/closing operation can be extremely simplified.

A door opening/closing device set forth in claim 15 according to the present invention, includes an outer door handle and an inner door handle gripped in a door opening/ closing operation; a door locking means for locking a door not to be opened from a main body on which the door is closed; a door latching means for latching the door releasably from the main body; a door latch release operating means for releasing a latch of the door latching means in cooperation with an operation that is applied from an outer side or an inner side to open the door; a door latch release signal sensing means for generating a signal in response to an operation of the door latch release operating means; and a main body-side controlling means for controlling an open of the door locking means by a sensed signal of the door latch release signal sensing means.

Accordingly, the door latch release signal sensing means responds to the action of the door latch release operating means, which cooperates with the door opening operation applied from either of the outer side and the inner side, to generate the signal, and then the main-body side controlling means when receives this signal controls the open of the door locking means. Therefore, the door opening operation as well as the open and shut of the door lock can be carried out from either of the outer side and the inner side, and thus complication in the door opening operation from either of the outer side and the inner side can be reduced in contrast to the prior art to make the operation easy.

A door opening/closing device set forth in claim 16 according to the present invention, includes an outer door handle and an inner door handle gripped in a door opening/ closing operation; a door locking means for locking a door not to be opened; a door latching means for latching the door releasably from a main body; a door latch release/set operating means for releasing and setting the door latching means in cooperation with an operation that is applied from an outer side or an inner side to open/close the door; a door latch release/set signal sensing means for generating a signal in response to an operation of the door latch release/set operating means; and a main body-side controlling means for controlling an open and a shut of the door locking means by a sensed signal of the door latch release/set signal sensing means.

Accordingly, the door latch release/set signal sensing means responds to the action of the door latch release/set operating means, which cooperates with the door opening/closing operation applied from either of the outer side and the inner side, to generate the signal, and then the main-body side controlling means when receives this signal controls the open and close of the door locking means. Therefore, the door opening/closing operation as well as the open and shut of the door lock can be carried out from either of the outer side and the inner side, and thus complication in the door opening/closing operation from either of the outer side and the inner side can be reduced in contrast to the prior art to make the operation easy.

In the door opening/closing device set forth in claim 17, the door latch release signal sensing means or the door latch release/set signal sensing means senses solely a door opening operation or door opening/closing operation applied from an outer side or an inner side.

Accordingly, the door latch release signal sensing means or the door latch release/set signal sensing means responds to the action of the door latch release operating means or the door latch release/set operating means, which cooperates with the opening/closing operation of the door applied from either of the outer side and the inner side, to generate the signal. Therefore, this door latch release signal sensing means or this door latch release/set signal sensing means can be used commonly in sensing the door opening operation or the door opening/ closing operation from either of the outer side and the inner side, and variation in sensing the door opening operation or the door opening/closing operation can be eliminated, so that the stable door opening/closing operation can be executed.

In the door opening/closing device set forth in claim 18, the door latch release signal sensing means or the door latch release/set signal sensing means is provided to a position from which a signal is generated by an action of a common portion that cooperates with a door opening operation applied from an outer side or an inner side by the door latch release operating means or a door opening/closing operation applied from the outer side or the inner side by the door latch release/set operating means respectively.

Accordingly, the same advantages as the invention set forth in claim 17 can be achieved. Also, since the door latch release/set signal sensing means is provided to the position, from which the signal is generated by the action of the common portion that cooperates with the door opening operation or the door opening/closing operation from either of the outer side and the inner side respectively, the installation can be made simple.

In the door opening/closing device set forth in claim 19, the door latch release signal sensing means or the door latch release/set signal sensing means is provided in an inside of a door.

Accordingly, the door latch release signal sensing means or the door latch release/set signal sensing means is provided to the inside of the door that is wider than the insides of the inner and outer door handles that are grasped to open/close the door, and the constraints of the installation space can be reduced and the installation can be made easy.

Also, there is no need of an installation of the door latch release signal sensing means or the door latch release/set signal sensing means into the door handle. Therefore, it is not needed that a hollow portion of a predetermined size into which the door latch release signal sensing means or the door latch release/set signal sensing means is installed should be provided to the door handle. As a result, a shape or a dimension of the door handle can be designed arbitrarily while attaching importance to the gripping characteristic in operation, the external design, and the like, and thus a margin of design for a shape or a dimension of the door handle is increased.

In the door opening/closing device set forth in claim 20, the door latch release signal sensing means or the door latch release/set signal sensing means is formed of a piezoelectric element material, and the piezoelectric element material is deformed by an action of the door latch release operating means or the door latch release/set operating means to output an electric signal.

Accordingly, the piezoelectric element material is used as the door latch release signal sensing means or the door latch release/set signal sensing means and this piezoelectric element material is arranged to deform in response to the action of the door latch release operating means or the door latch release/set operating means and output the electric signal. Therefore, a sensitivity of the door opening operation or the door opening/closing operation applied from either of the outer side and the inner side can be improved, and then respective timings for the release of the door latching means and the open of the door locking means or the release and set of the door latching means and the open and shut of the door locking means from the main body by the outer door handle and the inner door handle can be adequately set easily. Thus, the operability of the door opening/closing operation can be improved.

In the door opening/closing device set forth in claim 21, a bended portion to which a tension is applied is provided to the piezoelectric element material, and the bended portion is arranged to receive a deformation by an action of the door latch release operating means or the door latch release/set operating means.

Accordingly, the bended portions of the piezoelectric element material, to which a tension is applied to enhance sensitivity, are subject to the deformation generated by the action of the door latch release operating means or the door latch release/set operating means. Therefore, a sensitivity of the door opening operation or the door opening/closing operation applied from either of the outer side and the inner side can be further enhanced. As a result, respective timings for the release of the door latching means and the open of the door locking means or the release and set of the door latching means and the open and shut of the door locking means from the main body by the outer door handle and the inner door handle can be adequately set easily, and thus the operability of the door opening/closing operation can be further improved.

In the keyless entry system set forth in claim 22, the main body-side controlling means includes a main-body transmitting/receiving means, a password signal requesting means for receiving a sensed signal of the door latch release signal sensing means or the door latch release/set signal sensing means and then requesting a controlling means carried with a door opening/closing operator to transmit a password requesting signal via the main-body transmitting/receiving means, a door opening/closing operator deciding means for deciding whether or not a password signal transmitted from the controlling means carried with the door opening/closing operator and decrypted coincides with a normal signal set previously, and a lock open controlling means or a lock open/shut controlling means for controlling a open or open/shut of a door locking means when the password signal is normal.

Accordingly, the same advantages as those in any one of the inventions set forth in claim 15 to claim 21 can be achieved, and also a sensitivity of the door opening operation or the door opening/closing operation applied from either of the outer side and the inner side can be improved. Therefore, a time required until the lock open controlling means instructs the door locking means to open or the lock open/shut controlling means instructs the door locking means to open or shut can be reduced, and thus this keyless entry system can respond to the rapid door opening operation or the rapid door opening/closing operation and also the door locking means can be opened and closed smoothly.

A vehicle door set forth in claim 23 according to the present invention equipped with the keyless entry system set forth in claim 22.

Accordingly, the same advantages as those in the invention set forth in claim 22 can be achieved. Also, when this keyless entry system is installed in the car, for example, the door opening operation or the door opening/closing operation applied from the outer side and the inner side to get on and off is made easy at a timing at which the door locking means is opened an closed, and the car of which the operator gets on and off smoothly can be provided.

A building door set forth in claim 24 according to the present invention quipped with the keyless entry system set forth in claim 22.

Accordingly, the same advantages as those in the invention set forth in claim 22 can be achieved. Also, when this keyless entry system is installed in the building, or the like, the door opening operation or the door opening/closing operation applied from the outer side and the inner side to get on and off is made easy at a timing at which the door locking means is opened an closed, and the house of which the operator goes on and off smoothly can be provided.

The door opening/closing device of the present invention makes it possible to open or shut the door lock by the door opening operation or the door opening/closing operation applied from either of the outer side and the inner side, and it is possible to make the user's door opening/closing operation easy.

### <Brief Description of the Drawings>

Fig. 1 is an external perspective view showing a door handle device of a first embodiment according to the present invention.
Fig. 2 is an internal configurative view, wherein (a) shows an A-A section in Fig. 1 and (b) shows a B-B section in Fig.2(a).
Fig.3 is a schematic configurative view of a piezoelectric sensor shown in Fig.2.
Fig.4 is a configurative view of piezoelectric element material shown in Fig.2.
Fig. 5 is a block diagram of the door handle device.
Fig.6 is an explanatory view showing a correlation between a door opening action of an operator and a processing action of a vehicle-side controlling portion.
Fig.7 is a flowchart showing procedures done up to a lock open of a door locking means.
Fig. 8 are characteristic views showing an output signal V from the piezoelectric sensor and a decision output J of a deciding means shown in Fig.5.
Fig.9 is a sectional view showing a variation of the first embodiment in which the piezoelectric sensor is provided along an inner surface of a handle casing.
Fig.10 are sectional views showing a door handle device of a second embodiment according to the present invention.
Fig.11 is a view taken along a C-C line in Fig.10.
Fig.12 is a plan view showing a variation 1 of the second embodiment in which the piezoelectric sensor is arranged near a supporting shaft.
Fig.13 is a plan view showing a variation 2 of the second embodiment in which a top end of the piezoelectric sensor is inserted into an insertion hole of a handle main body.
Fig.14 is a plan view showing a variation 3 of the second embodiment in which the handle main body is constructed as a handle integrated into a door.
Fig.15 is block diagrams showing a keyless entry system of a third embodiment according to the present invention, wherein (a) shows a schematic configuration thereof and (b) shows a principal detailed configuration thereof.
Fig.16 is a flowchart showing operational procedures in the keyless entry system shown in Fig.15.
Fig.17 is block diagrams showing a keyless entry system of a fourth embodiment according to the present invention, wherein (a) shows a schematic configuration thereof and (b) shows a principal detailed configuration thereof
Fig.18 is an explanatory view showing a signal inputting method of the keyless entry system shown in Fig.17.
Fig.19 is a flowchart showing operational procedures in the keyless entry system shown in Fig.17.
Fig.20 is explanatory views showing correlations between a pressure applied to a door handle, a sensed signal derived from this pressure, and a pulse derived from this sensed signal.
Fig.21 is a flowchart of procedures in a password signal recognizing process in the keyless entry system shown in Fig.17.
Fig.22 is characteristic views showing a time transition of a signal S1 of a piezoelectric sensor, a signal S2 of a disturbance sensor, and a signal S1-S2.
Fig. 23 is an external perspective view showing a door handle device of a fifth embodiment according to the present invention.
Fig.24 is a flowchart of procedures in a password signal recognizing process in the door handle device shown in Fig.23.
Fig.25 is explanatory views showing correlations between a gripping force applied to a door handle, a sensed signal derived from this gripping force, and a pulse derived from this sensed signal.
Fig.26 is an explanatory view of a sensed frequency containing a signal extracting band and a noise band.
Fig.27 is an external view of a door portion of a vehicle equipped with a door handle device of a sixth embodiment according to the present invention.
Fig.28 is a perspective view of a door not fully closed, from which the handle appears.
Fig.29 is a perspective view of a hatch back door to which the door handle device is provided.
Fig.30 is an explanatory view showing the portion, to which the door handle device according to the present invention can be applied, in (a) to (e).
Fig.31 is an explanatory view showing the case where the door handle device according to the present invention is employed in the pull-up handle.
Fig.32 is a configurative block diagram showing a door opening/closing system, which is installed into a vehicle door, of a seventh embodiment according to the present invention.
Fig.33(a) is a schematic configurative view showing a door latching means portion of the same door opening/closing system when a door is closed, and Fig.33(b) is a view showing a release/set sensing portion of the door latching means.
Fig.34(a) is a schematic configurative view showing the door latching means portion of the same door opening/closing system when the door is opened, and Fig.34(b) is a view showing the release/set sensing portion of the door latching means.
Fig.35 is a configurative view of a unit containing a piezoelectric element material for sensing the opening/closing of the door in the same door opening/closing device.
Fig.36 is a configurative view of the piezoelectric element material in the same door opening/closing system.
Fig.37 is a control block diagram of the keyless entry system using the same door opening/closing system.
Fig.38(a) is a view of a bending load applied to the piezoelectric element material in the same door opening/closing system, and Fig.38(b) is a characteristic view of an output of the piezoelectric element material being output in response to the bending load.
Fig.39 is a principal sectional view of the door handle portion of the car in the prior art.
Fig.40 is a schematic perspective view of the door handle portion when viewed from the interior side of the car in the prior art.

In Figures, reference numerals 11, 131, 141 denote a handle, 13 door, 13a side surface (exposed position), 15 piezoelectric sensor, 15b top end, 17, 97, 101, 121 control circuit (control portion), 21, 175 supporting shaft, 23, 133, 173 handle main body, 23a one end side, 23b the other end side, 23c surface opposing to a door, 31 piezoelectric element, 85 insertion hole, 91 vehicle-side transmitter/receiver, 93 mobile-side transmitter/receiver, 100, 200, 500, 600 door handle device, 103 door locking means, 105 password signal requesting means, 111 password signal deciding means, 113 lock open instructing means, 123 disturbance sensor, 127 password signal inputting means, 300, 400 keyless entry system, 720 main body, 721 door, 722 door locking means, 723 outer door handle, 724 inner door handle, 725 door latching means, 726 door latch release/set operating means (door unlatch operating means), 727 door latch release/set signal sensing means (door latch release signal sensing means), 728 main-body side controlling means, 734 lever (common portion), 736 piezoelectric element material, 736a bended portion, 746 main-body transmitting/receiving means, 748 lock open/shut controlling means (lock open controlling means), 756 controlling means carried with a door open/close operator, 757 password signal requesting means, and 761 password signal deciding means.

### <Best Mode for Carrying Out the invention>

Preferred embodiments of a door handle device and a keyless entry system having the same according to the present invention will be explained in detail with reference to the drawings hereinafter.

### (First Embodiment)

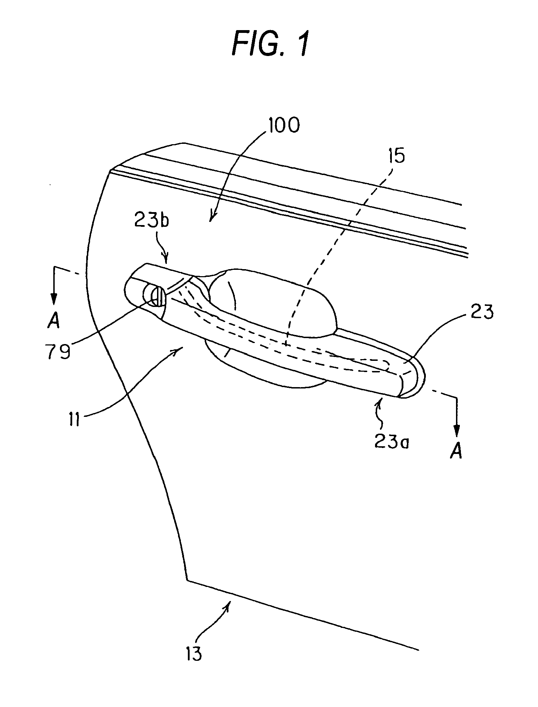

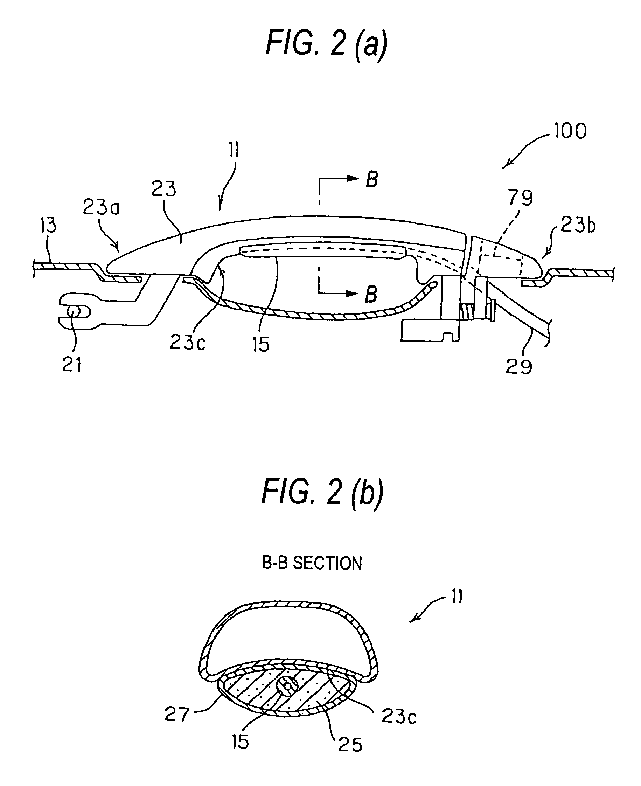

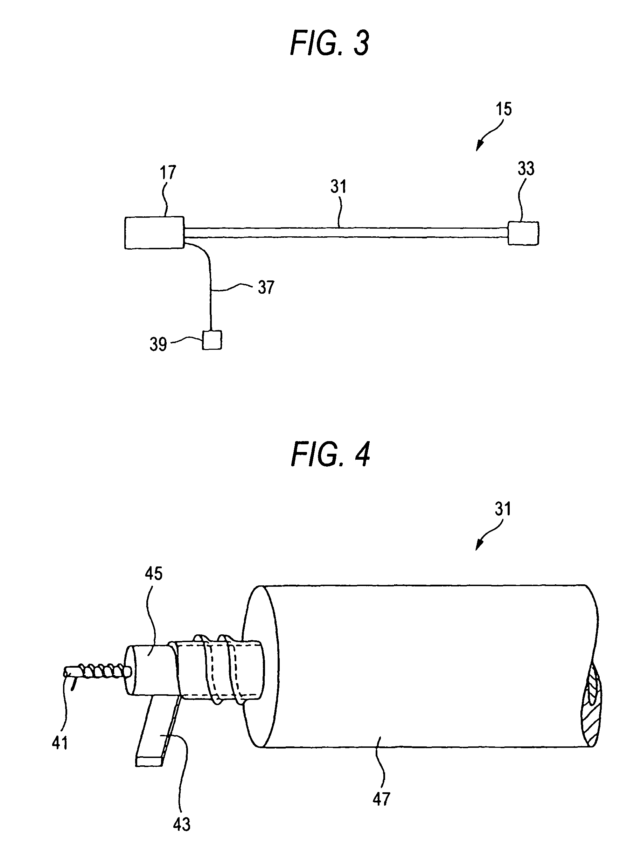

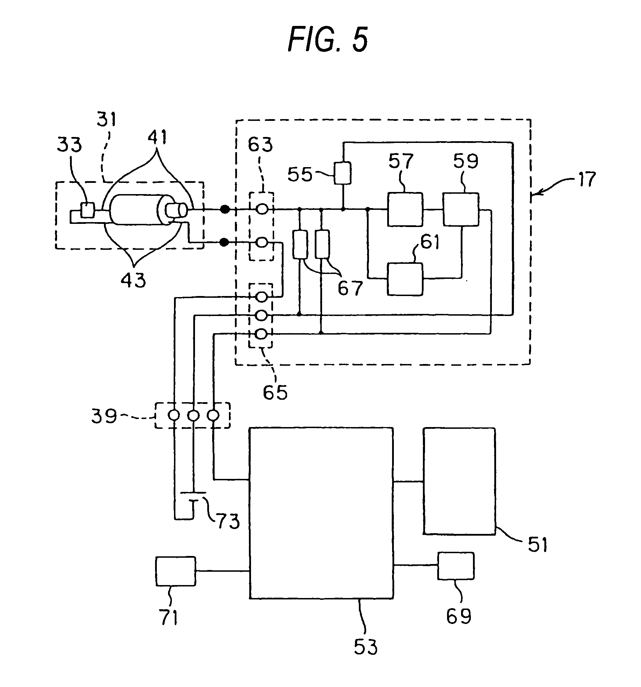

Fig. 1 is an external perspective view showing a door handle device of a first embodiment according to the present invention. Fig.2 is an internal configurative view, wherein (a) shows an A-A section in Fig. 1 and (b) shows a B-B section in Fig.2(a). Fig.3 is a schematic configurative view of a piezoelectric sensor shown in Fig.2. Fig.4 is a configurative view of piezoelectric element material shown in Fig.2. Fig.5 is a block diagram of the door handle device.

As shown in Fig.1, a door handle device 100 according to the first embodiment is provided to a door 13 having a handle 11 used for the opening/closing operation. A door locking means (not shown) for locking the opening operation of this door 13 can be unlocked by operating the handle 11. The door handle device 100 has a piezoelectric sensor 15 formed of a piezoelectric element provided to the handle 11 and having a flexibility, and a control circuit 17, described later, acting as a control portion that receives a sensed signal of the piezoelectric sensor 15, which is generated by a touch on the handle 11, to open the lock of the door locking means (see Fig.3, Fig.5), as the major configuration.

The door handle device 100 is fitted to the door (door outer panel) 13 of the vehicle. The handle 11 has a handle main body 23 one end side 23a of which is supported swingably onto the door 13 to move the other end side 23b in the pull-out direction by this swing action. That is, this handle 11 constitutes the pull-rise handle 11 one side of which acts as a hinge. The piezoelectric sensor 15 is arranged on a surface 23c of the handle main body 23 opposing to the door 13, and can sense a vibration caused by a gripping action of the handle main body 23. In Fig.2(a), 79 denotes a key cylinder case equipped on the rear side of the handle main body 23.

In the present embodiment, as shown in Fig.2(b), the piezoelectric sensor 15 is covered with a tube-like covering member 27 via a buffer material 25. That is, the covering member 27 is pasted on the surface 23c of the handle main body 23 opposing to the door 13. A cable portion 29 of the piezoelectric sensor 15, which is extended from the other end side 23b of the handle main body 23, is brought into the door 13 and connected to the control circuit 17. Because the piezoelectric sensor 15 is arranged on the surface 23c of the handle main body 23 opposing to the door 13, the driver can touch directly the neighborhood of the piezoelectric sensor 15 with a high probability when the hand is inserted between the door and the handle main body 23 and the handle main body 23 is grasped by the fingers, whereby a sensitivity of the gripping action can be enhanced.

As shown in Fig.3, the piezoelectric sensor 15 is constructed by a piezoelectric element material 31 formed like a cable having a predetermined length, a disconnection sensing resistor 33 connected to one end of the piezoelectric element material 31, the control circuit 17 connected to the other end of the piezoelectric element material 31, a cable 37 connected to the control circuit 17, and a connector 39 connected to a top end of the cable 37. The cable 37 connected to the control circuit 17 is used to feed a power supply voltage and output a sensed signal, and connected a power supply and a communication terminal via the connector 39 provided to the top end.

The piezoelectric element material 31 used in the piezoelectric sensor 15 has a structure shown in Fig.4, and is formed by coating a piezoelectric element material (composite piezoelectric layer) 45 made of piezoelectric ceramics around a core wire (center electrode) 41, then providing an outer electrode 43 around the piezoelectric element material, and then covering the outermost periphery with a covering layer 47 made of PVC (vinyl chloride resin), or the like. This piezoelectric element material 31 has an excellent flexibility and generates an output signal in response to a deformation acceleration at a time of deformation. As the piezoelectric ceramics, the sintered powder such as lead titanate or lead titanate zirconate or the non-lead-based piezoelectric ceramics sintered powder such as sodium niobate, or the like, for example, is employed.

In the cable-like piezoelectric sensor 15, a resin material developed originally by the applicant, an available temperature of which can be set up to 120 °C and which has a thermal resistance, is used as the piezoelectric element material 45, and can be used at a higher temperature range (120 °C or less) than 90 °C that is the highest available temperature of the typical polymer piezoelectric element material (monoaxial stretched poly(vinylidene fluoride)) or piezoelectric element material (piezoelectric element material consisting of chloroprene and piezoelectric ceramic powders) in the prior art. Also, the piezoelectric element material 45 is constructed by a resin having a flexible characteristic and the piezoelectric ceramics, and a flexible electrode consisting of a coil-like metal center electrode and a film-like outer electrode are used, and the piezoelectric element material 45 has a flexible characteristic equivalent to the normal vinyl cord.

The piezoelectric element material 45 is constructed by a composite material of a resin-based material and the piezoelectric ceramic powders of 10 µm or less. The vibration sensing characteristic and the flexible characteristic are realized by the ceramics and the resin respectively. The piezoelectric element material 45 employs chlorinated polyethylene as the resin-based material, so that a high heat resistance (120 °C) and the easily-formable flexibility can be implemented and also simple manufacturing steps that do not need the crosslinking can be realized.

The cable-like piezoelectric sensor 15 obtained in this manner does not have a piezoelectric performance just after the piezoelectric element material 45 is molded. Therefore, a process of affixing the piezoelectric performance to the piezoelectric element material 45 (polarizing process) must be executed by applying a DC high voltage of several kV/mm to the piezoelectric element material 45. In case a minute defect such as a crack, or the like resides in the piezoelectric element material 45, both electrodes are easily short-circuited via a discharge occurred at this defect portion and therefore an enough polarizing voltage cannot be applied. In the present invention, since the unique polarizing step using an auxiliary electrode that can be adhered closely to the piezoelectric element material 45 in a predetermined length is established, the polarization can be stabilized by sensing/avoiding the defect, so that the long piezoelectric cable in excess of several tens m can be obtained.

Also, in the piezoelectric cable sensor, the coil-like metal center electrode and the film-like electrode (three- layered laminate film consisting of aluminum-polyethylene terephthalate-aluminum) are used as the center electrode 41 and the outer electrode 43 respectively. Accordingly, an adhesiveness between the piezoelectric element material45 and the electrode can be ensured and also the connection of the external lead wire can be facilitated, and thus the flexible cable-like packaging structure can be constructed.

The center electrode 41 is formed of the copper-silver alloy coil, the outer electrode 43 is formed of the three- layered laminate film consisting of aluminum-polyethylene terephthalate-aluminum, the piezoelectric element material 45 is formed of the polyethylene resin and the piezoelectric ceramic powders, and a sheath is formed of the thermoplastic plastics. As a result, a relative dielectric constant is 55, a quantity of generated charge is 10 to 13 C (coulomb)/gf, and a highest available temperature is 120 °C.

The above piezoelectric element material 31 is manufactured by following steps by way of example. At first, a chlorinated polyethylene sheet and piezoelectric ceramic (here, lead titanate zirconate) powders of 40 to 70 volume % are mixed uniformly like a sheet by the roller method. The composite piezoelectric layer 45 is formed by cutting this sheet finely into pellets and then extruding continuously these pellets together with the center electrode 41. Then, the polarizing process is executed by bringing the auxiliary electrode into contact with the outer periphery of the composite piezoelectric layer 45 and then applying a high voltage between the auxiliary electrode and the center electrode 41. Then, the outer electrode 43 is wound around the composite piezoelectric layer 45. Also, the covering layer 47 is extruded continuously to cover the outer electrode 43.

It is preferable that, when the piezoelectric ceramics powders are added to the chlorinated polyethylene, such piezoelectric ceramics powders should be dipped into a titanium-coupling agent solution and dried previously. The surfaces of the piezoelectric ceramics powders are covered with the hydrophilic group and the hydrophobic group contained in the titanium-coupling agent by this process. The hydrophilic group prevents an aggregation of the piezoelectric ceramics powders, and the hydrophobic group increases a wettability of the chlorinated polyethylene and the piezoelectric ceramics powders. As a result, a large amount of piezoelectric ceramics powders can be added uniformly into the chlorinated polyethylene up to a maximum of 70 volume %. It is found that the same effect as the above can be attained by adding the titanium-coupling agent when the chlorinated polyethylene and the piezoelectric ceramics powders are rolled, in place of the dipping in the titanium-coupling agent solution. This process is excellent in such a respect that the dipping process in the titanium-coupling agent solution is not needed particularly. In this manner, the chlorinated polyethylene bears a role of a binder resin when the piezoelectric ceramics powders are mixed.

In the case of the present embodiment, a single-wire conductor made of copper-based metal is employed as the center electrode 41. Also, a stripe electrode in which an aluminum metal film is adhered onto a polymer layer is employed as the outer electrode 43, and this stripe electrode is wound around the composite piezoelectric layer 45. Since the electrode constructed by adhering an aluminum thin film onto the polyethylene terephthalate as the polymer layer can be commercially mass-produced inexpensively, such electrode is preferable as the outer electrode 43. This electrode can be connected to the control circuit 17 by a caulking or an eyelet, for example. Also, a metal single-wire coil or a metal mesh wire may be soldered around the aluminum thin film of the outer electrode 43 to be connected to the control circuit 17. An improvement in a working efficiency can be achieved because the soldering can be applied. In this case, in order to shield the piezoelectric element material 31 from the electrical noise in the external environment, preferably the outer electrode 43 should be wound on the outer periphery of the composite piezoelectric layer 45 to partially overlap mutually.

As the covering layer 47, the rubber material that is superior in a heat-insulating property and a water proofing property to the above vinyl chloride resin may be employed. Preferably the rubber material having a higher flexibility than the composite piezoelectric layer 45 should be employed such that the composite piezoelectric layer 45 can be readily deformed by a pushing force applied by the contacted article. The covering layer should be selected by taking a thermal resistance and a cold resistance in account as the onboard parts, and preferably the rubber material a degradation of the flexibility of which is small in a range of -30 °C to 85 °C should be selected particularly. As such rubber material, for example, ethylene-propylene rubber (EPDM), chloroprene rubber (CR), butyle rubber (IIR), silicon rubber (Si), thermoplastic elastomer, or the like may be employed. With the above configuration, a minimum curvature of the piezoelectric element material 31 can be reduced to a radius of 5 mm, and also excellent heat-insulating property and water proofing property can be ensured in contrast to the vinyl chloride.

As described above, the composite piezoelectric member of the piezoelectric element material 31 has both the flexibility that the chlorinated polyethylene possesses and the high-temperature durability that the piezoelectric ceramics possesses. Therefore, such advantaged can be achieved that a sensitivity reduction caused in the conventional piezoelectric sensor that uses the poly(vinylidene fluoride) as the piezoelectric member is not generated at a high temperature, the high-temperature durability is excellent, and a production efficiency is improved because the vulcanizing step required for the rubber such as EPDM is not needed in the molding step.

As shown in Fig.5, an opening/closing driving means 51 for opening/shutting the door locking means of the door 13, and an opening/closing controlling means 53 for controlling an operation of this opening/closing driving means 51 are provided to the control circuit 17, which senses based on an output signal of the piezoelectric element material 31 whether or not the opening/closing operation of the door 13 was executed, to constitute the keyless entry system.

The control circuit 17 has a voltage-dividing resistor 55 used in sensing a disconnection of the piezoelectric element material 31, a filter portion 57 for passing only a predetermined frequency component out of the output signal of the piezoelectric element material 31, a deciding portion 59 for deciding a touch of the article to the piezoelectric element material 31 based on an output signal of the filter portion 57, and a failure deciding portion 61 for deciding a disconnection failure of the center electrode 41 and the outer electrode 43 of the piezoelectric element material 31 based on a voltage value produced by the disconnection sensing resistor 33 and the voltage-dividing resistor 55. Also, a signal inputting portion 63 for connecting the center electrode 41 and the outer electrode 43 and the control circuit 17 to input an output signal of the piezoelectric element material 31 into the control circuit 17, and a signal outputting portion 65 for outputting a decision signal from the deciding portion 59 are provided adjacently in the control circuit 17. A power supply line and a ground line are also connected to the signal outputting portion 65. Also, the control circuit 17 has a bypass portion 67 such as a capacitor that is provided between the signal inputting portion 63 and the signal outputting portion 65 to bypass a high-frequency signal, or the like.

Also, an informing means 69 for informing a decision result of the control circuit 17 by a light, a speaker, or the like that is provided to a predetermined position of a front panel, or the like in the interior, and an opening/closing switch 71 for opening/closing the door are connected to the opening/closing controlling means 53.

Also, a power supply 73 formed of a battery, or the like of the car to supply a power via the control circuit 17 is provided.

The filter portion 57 has such a filtering characteristic that an unnecessary signal generated due to a vibration, or the like of a car body of a car can be eliminated from the output signal of the piezoelectric element material 31 and only a peculiar frequency component appearing in the output signal of the piezoelectric element material 31 when the piezoelectric element material 31 is deformed by a pushing pressure generated by a touch of the foreign matter can be extracted. The decision of the filtering characteristic may be optimized by analyzing the vibration characteristic of the car body of the car and the car body vibration during the running.

The overall control circuit 17 is electrically shielded with a shielding member to remove the external electrical noise. Also, the outer electrode 43 is electrically connected to the shielding member of the control circuit 17, and the piezoelectric element material 31 is also electrically shielded. In this case, the strong electric field measure may be applied to the input/output portions of the above circuits by attaching a feedthrough capacitor, an EMI filter, or the like.

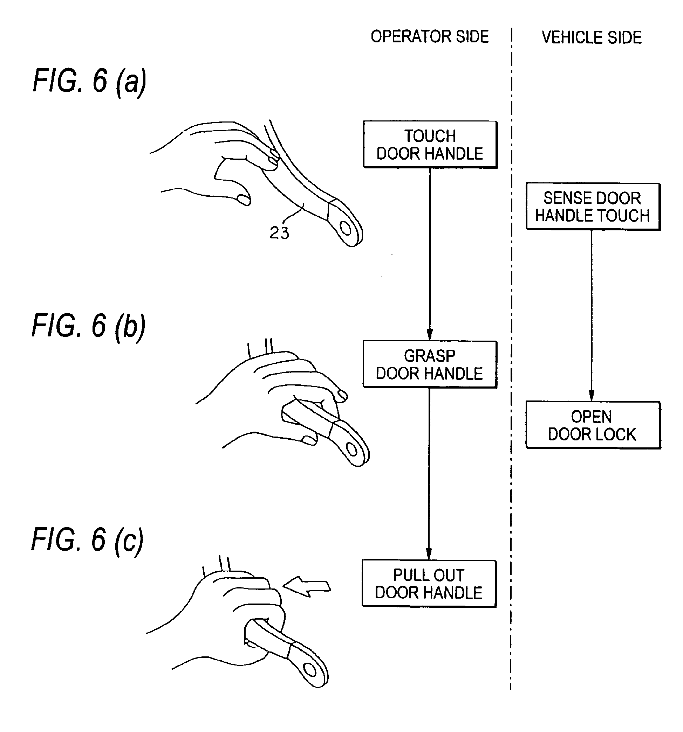

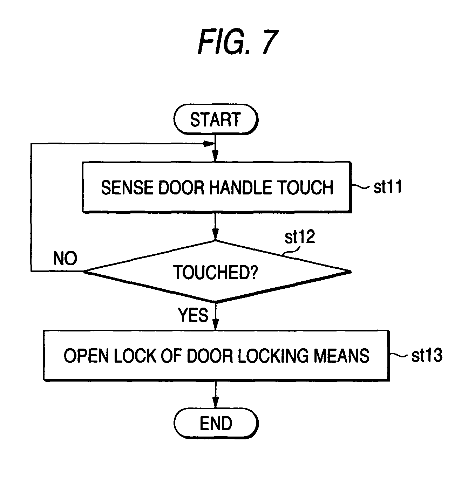

Here, an explanatory view showing a correlation between the door opening action of the operator and a processing action of the vehicle-side controlling portion is shown in Fig.6. A flowchart showing procedures done up to the lock open of the door locking means is shown in Fig.7.

In the above door handle device 100, as shown in Fig.6(a), when the operator's hand touches the handle main body 23, an acceleration component of the vibration generated by this touch is sensed by the piezoelectric element material 31 (also referred simply to as the "piezoelectric sensor 15" hereinafter) on the vehicle side (st 11 in Fig. 7). Then, the control circuit 17 decides whether or not the opening/closing operation of the door 13 was executed, based on the output signal of the piezoelectric element material 31 at that time (st 12 in Fig. 7) before the handle main body 23 is grasped, as shown in Fig.6(b). Then, a lock open signal is sent out from the opening/closing controlling means 53 before the handle main body 23 is pulled out, as shown in Fig.6(c), and then the lock of the door locking means is opened by the opening/closing driving means 51 (st 13 in Fig.7). In other words, the open of the door lock is finished completely prior to the pulling-out of the handle main body 23 and therefore the door lock has already been opened even when the door 13 is pulled out sharply. Thus, a good operation feeling that neither generates a rattling nor requires to wait for a predetermined time after the grasp of the door handle can be realized.

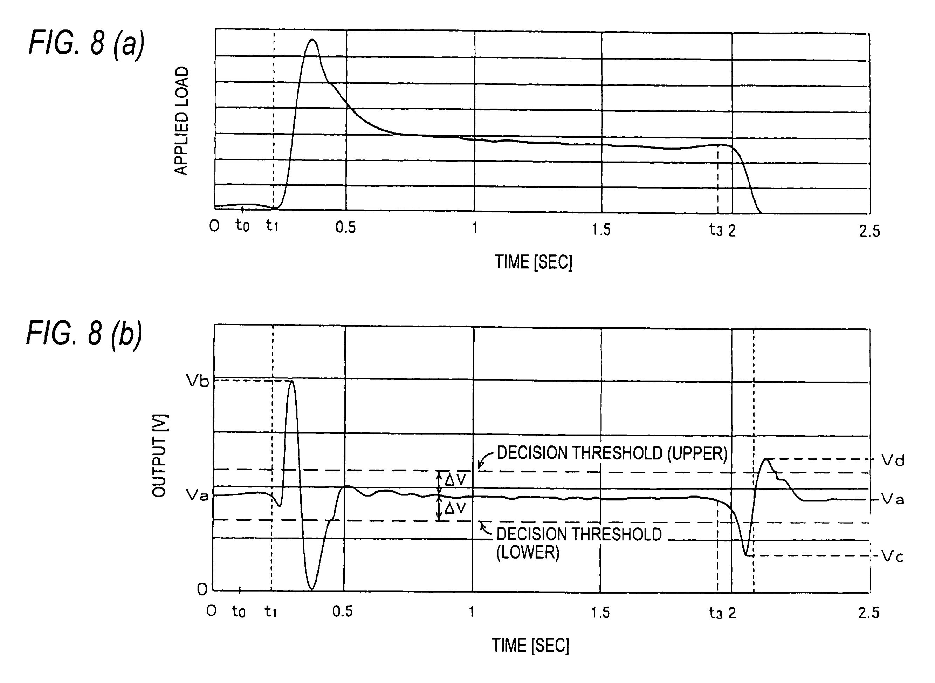

Fig. 8 are characteristic views showing a load applied to the cable-like piezoelectric sensor 15 and a sensor output characteristic. The applicant has verified a relationship between a load of the piezoelectric sensor 15 and a sensor output by experiment, with the result that a sensor output shows a variation shown in Fig.8(b) when a bending load shown in Fig.8(a) is applied to the piezoelectric sensor 15.
(1) When no load is applied to the piezoelectric sensor 15 at a time t₀, the sensor output shows a voltage Va.
(2) When the bending load is applied to the piezoelectric sensor 15 in a predetermined direction at a time t₁, the sensor output is increased to Vb at that moment, then is reversed immediately to 0 (V), and then is returned again to Va.
(3) Then, the sensor output still shows Va when the sensor is kept in its bent state.
(4) When the piezoelectric sensor 15 is restored to its original state at a time t₃, the sensor output is decreased to Vc at that moment, then is reversed immediately to Vd, and then is returned again to Va.

In this manner, since the piezoelectric sensor 15 can sense the output responding to the acceleration with high sensitivity, such sensor can sense an infinitesimal vibration with good precision and output it. In this case, for example, a decision threshold having a predetermined voltage amplitude ΔV from the voltage Va may be set to sense a load application timing, and it may be decided that a change of load occurs when the sensor output exceeds this decision threshold.

In the door handle device 100 explained above, when the operator touches the handle main body 23 with the fingers, the piezoelectric sensor 15 can sense whether or not the opening/ closing operation of the door was executed, based on the vibration generated by the touch, and therefore there is no need of an installation of the piezoelectric sensor 15 itself into the handle main body 23. Therefore, the piezoelectric sensor 15 can be arranged even though a hollow portion of a predetermined size into which the piezoelectric sensor 15 is installed is not given. As a result, a shape or a dimension of the handle main body 23 can be designed arbitrarily while attaching importance to the gripping characteristic, the external design, and the like, and thus a margin of design for a shape or a dimension of the handle main body 23 is increased.

Also, since the piezoelectric sensor 15 of the present invention using the piezoelectric element material 31 can be operated stably under a consumption current of 1 mA or less, a burden of the onboard battery can be reduced by the reduction of the consumption current rather than the electrical capacitance type piezoelectric sensor in the

### prior art.

According to the door handle device 100 of the first embodiment, since the piezoelectric sensor 15 can be attached to the handle 11 as the cable with the flexibility, the vibration acting on the handle 11 can be sensed with high sensitivity. Therefore, an enough signal output can be obtained when the operator simply touches the handle 11, and a light touch on the handle 11 can be sensed. Also, because it is not needed to provide the electrodes on the surface, the sensor is hardly influenced by the disturbance, attached dusts, rain, snow, etc. In addition, because the piezoelectric sensor 15 can be deformed flexibly, constraint conditions of a fitting space can be lessened and the fitting space can be reduced. Besides a fitting operation can be simplified.

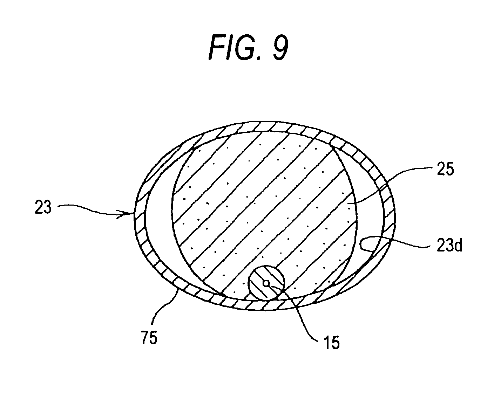

Also, as shown in Fig.9, the door handle device 100 can sense the vibration generated by the operator's touch with high sensitivity even when the piezoelectric sensor 15 is provided to the inside of the handle main body 23. In this case, in order to facilitate the fitting operation into the handle main body 23, the piezoelectric sensor 15 can be inserted together with the buffer material 25 such as sponge, urethane rubber, or the like into the inside of the handle main body 23 and then secured. In this manner, because the piezoelectric sensor 15 is provided to the inside of the handle main body 23 and is covered with a casing 75 of the handle main body 23, such sensor can be protected from an impact applied by other materials and a time-dependent wear generated by the hand contacted in the operation. The fitting fashion is not limited to the above, and the piezoelectric sensor 15 may be adhered onto an inner wall surface of the handle main body 23 by the adhesive, or the like.

Also, it is preferable that, when the piezoelectric sensor 15 is built in the inside of the handle main body 23, such sensor should be provided along an inner surface 23d of the handle main body 23 in a predetermined length, as shown in Fig.9. With such arrangement, the vibration generated by the gripping operation of the handle main body 23 can be caused to transfer more easily.

### (Second Embodiment)

Next, a door handle device of a second embodiment according to the present invention will be explained hereunder. Here, in following embodiments, the same symbols are affixed to the same members or portions as those shown in Fig. 1 to Fig.9 and their duplicate explanation will be omitted herein.

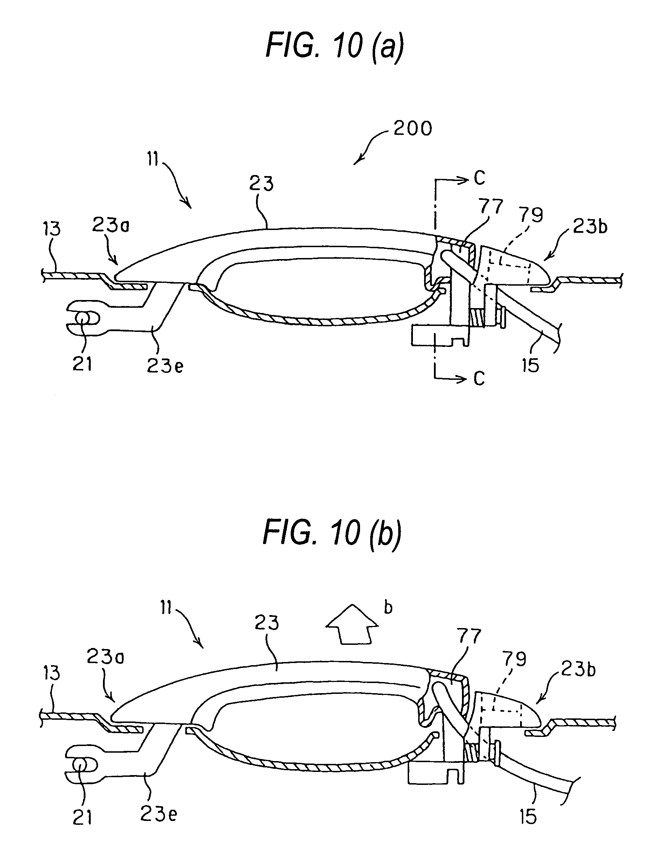

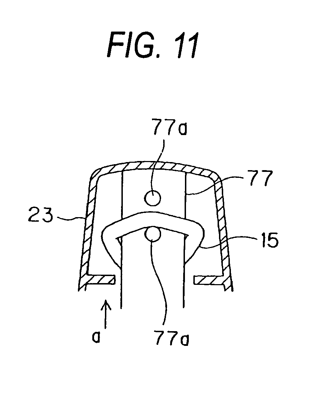

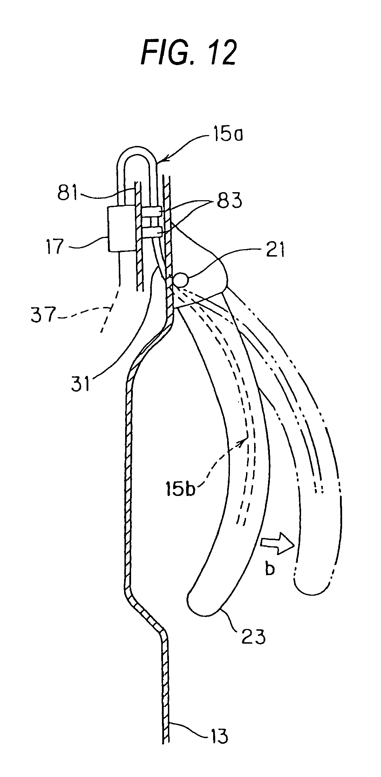

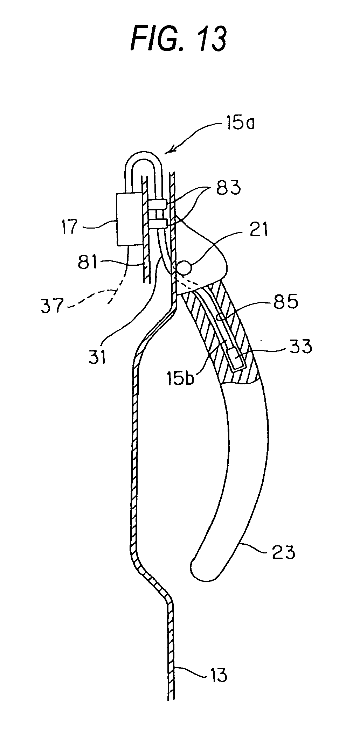

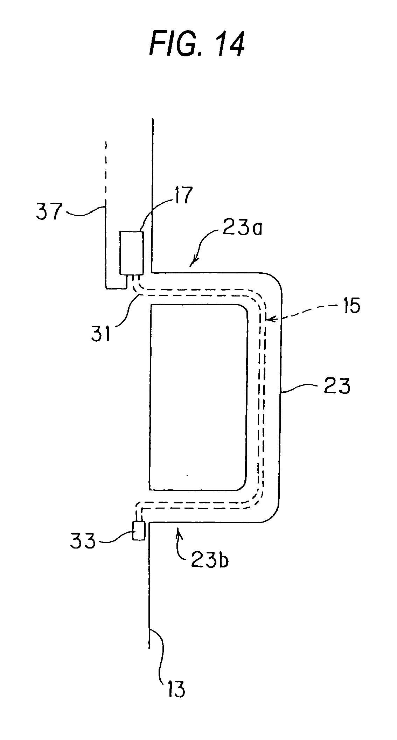

Fig.10 are sectional views showing a door handle device of a second embodiment according to the present invention. Fig.11 is a view taken along a C-C line in Fig.10. Fig.12 is a plan view showing a variation 1 of the second embodiment in which the piezoelectric sensor is arranged near a supporting shaft. Fig.13 is a plan view showing a variation 2 of the second embodiment in which a top end of the piezoelectric sensor is inserted into an insertion hole of a handle main body. Fig.14 is a plan view showing a variation 3 of the second embodiment in which the handle main body is constructed as a handle integrated into a door.

A door handle device 200 according to this embodiment is constructed by the handle main body 23 acting as the gripping portion in the opening/closing operation of the door 13, a movable portion 77 moved together with the handle main body 23 by a predetermined displacement when the operator, or the like grasps the handle main body 23 with the fingers to open/close the door 13, and the piezoelectric sensor 15 for sensing a displacement of the movable portion 77 to output an electric signal.

The piezoelectric sensor 15 is fitted into the door of the vehicle such that the sensor is deformed by the displacement of the movable portion 77 accompanied with the operation of the handle main body 23. More concretely, as shown in Fig.11, a part of the cable-like piezoelectric sensor 15 is wound around the outer periphery of the rod-like movable portion 77, and the piezoelectric sensor 15 is positioned on the outer peripheral surface of the movable portion 77 by a pair of projections 77a, 77b that are provided to project from the outer peripheral surface of the movable portion 77. When the movable portion 77 is displaced in the direction a indicated with an arrow in Fig.11 following upon the operation of the handle main body 23, a pair of projections 77a, 77b push the outer peripheral surface of the piezoelectric sensor 15 to generate a deformation in the piezoelectric sensor 15.

In this case, an arm 23e of the handle main body 23, which is extended from the front portion to swing in the direction b indicated with an arrow in Fig.10, is coupled to the door side via a supporting shaft 21. Also, the key cylinder case 79 is equipped on the rear side of the handle main body 23. In the case of the present embodiment, the movable portion 77 is a rod-like linking parts that projects into the door 13 from the rear end side of the handle main body 23, and one end thereof is fixed to the handle main body 23 and the other end thereof is releasably locked by the door lock device and is slid correspondingly and displaced in the direction a indicated with an arrow when the handle main body 23 is pulled out in the direction b indicated with an arrow.

That is, in the door handle device 200, the handle 11 has the handle main body 23 one end side 23 a of which is supported swingably on the door 13 via the supporting shaft 21 and the other end side 23b of which is moved in the pull-out direction by this swing operation. Also, the piezoelectric sensor 15 is bridged to extend between the door 13 and the other end side 23b of the handle main body 23 to sense the vibration generated by the pulling operation of the handle main body 23.

Therefore, in the door handle device 200, when the operator's fingers are put on the handle main body 23 and the handle main body 23 is pulled out in the direction b indicated with an arrow, the piezoelectric sensor 15 wound around the movable portion 77 receives a pushing pressure by a pair of projections 77a, 77b and is deformed by the movable portion 77 that is displaced together with the handle main body 23. The control circuit 17 decides whether or not the opening/closing operation of the door was done, based on the output signal of the piezoelectric sensor 15 at that time, and then the operation of the opening/closing driving means 51 can be controlled.

Then, the piezoelectric element material 31 is subject to deformation by the movable portion 77 that is displaced together with the handle main body 23 by a predetermined amount at a time of opening/closing operation of the door 13, and then the piezoelectric sensor 15 senses whether or not the opening/closing operation was taken. There is no chance to sense the approach of the article irrespective of the door opening/closing operation, or the like by mistake, in contrast to the electrical capacitor type handle operation sensor in the prior art. Accordingly, it can be sensed sharply by setting a sensitivity high whether the opening/closing operation of the door was taken, in response to a slight displacement of the movable portion 77 that is displaced together with the handle main body 23. Thus, even when the finger touch to the handle main body 23 is made weakly in the opening/closing operation of the door 13, it can be sensed without fail whether the opening/closing operation of the door was executed.

Also, the piezoelectric sensor 15 does not output the sensed signal unless the composite piezoelectric layer 45 of the piezoelectric element material 31 is deformed by the displacement behavior of the movable portion 77 that is displaced together with the handle main body 23. Therefore, emission of the noise to the surrounding environment caused by the useless signal sending-out can be prevented.

According to the door handle device 200 of the second embodiment, one end side 23 a of the handle 11 is supported swingably to the door 13 via the supporting shaft 21, and the other end side 23b of the handle main body 23 is moved in the pulling-out direction when the handle 11 is gripped and pulled. Therefore, because the piezoelectric sensor 15 is bridges to extend between the other end side 23b and the door 13, a distortion is generated easily in the piezoelectric sensor 15 by a tension in response to the pulling operation of the handle main body 23 and thus a sensitivity can be increased.

Also, when the piezoelectric sensor 15 is deformed by the displacement of the movable portion 77 that is cooperated with the handle main body 23, such sensor can sense whether the opening/closing operation of the door was executed. Thus, there is no need to install the piezoelectric sensor 15 itself into the handle main body 23. Therefore, it is not needed to provide a hollow portion, which has a predetermined size and is used to fit the piezoelectric sensor 15, to the handle main body 23. As a result, a shape or a dimension of the handle main body 23 can be designed arbitrarily while attaching importance to the gripping characteristic, the external design, and the like, and thus a margin of design for a shape or a dimension of the handle main body 23 is increased.

The movable portion 77 that is displaced together with the handle main body 23 in the opening/closing operation of the handle main body 23 is not limited to the above embodiment. For example, the arm 23e that is displaced together with the handle main body 23, or other movable portion may be utilized. Also, an engaging mode between the piezoelectric element material 31 and the movable portion 77 to generate a deformation in the piezoelectric element material 31 is not limited to the above embodiment. In the above embodiment, the cable-like piezoelectric element material 31 is wound on the outer periphery of the rod-like movable portion 77. Further, the piezoelectric element material 31 can be wired to cut simply through the movable portion 77.

As a variation 1 of the door handle device 200 of the present embodiment, as shown in Fig.12, the handle 11 has the handle main body 23 one end side 23 a of which is supported swingably on the door 13 via the supporting shaft 21 and the other end side 23b of which is moved in the pull-out direction by this swing operation. Also, the piezoelectric sensor 15 is arranged in vicinity of the supporting shaft 21 of the handle main body 23 to sense the vibration generated by the swinging operation of the handle main body 23. The piezoelectric sensor 15 is fixed to a substrate 81 on which the control circuit 17 connected to a base end 15a is provided in the door 13. Also, the piezoelectric element material 31 located between the control circuit 17 and the supporting shaft 21 is fixed to the substrate 81 by a clamp 83.

According to the variation 1, because the piezoelectric sensor 15 is arranged near the supporting shaft 21, such piezoelectric sensor 15 bent at the supporting shaft 21 comes into touch with the supporting shaft 21 when the handle main body 23 is swung around the supporting shaft 21 in the direction b indicated with an arrow. Thus, the vibration generated by this touch can be sensed and a sensitivity can be enhanced. In this case, because a top end 15b of the piezoelectric sensor 15 is held in the inside of the handle main body 23, the vibration generated when the operator's fingers touch the handle main body 23 can also be sensed with high sensitivity.

Also, as a variation 2, as shown in Fig.13, the piezoelectric sensor 15 is bridged to extend between the door 13 and the one end side 23 a of the handle main body 23 while contacting the supporting shaft 21. The top end 15b as the free end is inserted on an insertion hole 85 formed in the handle main body 23. In this case, the top end 15b of the piezoelectric element material 31 is held movably in the inside of the insertion hole 85.

According to the variation 2, when the handle main body 23 is swung, the piezoelectric sensor 15 is brought into touch with the supporting shaft 21 and also the top end 15b of the piezoelectric sensor 15 is rubbed against the inner wall of the insertion hole 85. Thus, the operation of the handle main body 23 can be sensed over a long distance of the piezoelectric sensor 15 with high sensitivity. Also, in this door handle device, because the top end 15b of the piezoelectric sensor 15 is held in the insertion hole 85 as the free end, a time-dependent fatigue is hard to occur in the piezoelectric sensor 15 and thus a lifetime enhancement of the piezoelectric sensor 15 can be attained.

Also, as a variation 2, as shown in Fig.14, a door- integrated handle having the handle main body 23, both the one end side 23a and the other end side 23b of which are fixed to the door 13, may be employed as the handle 11.

According to the variation 3, because the handle main body 23 is constructed as the door-integrated handle having no movable portion, the piezoelectric sensor 15 is not deformed directly by the operation of the handle main body 23 but the handle operation is sensed only by the vibration that is propagated by the touch to the handle main body 23. In the case of this door handle device, the time-dependent fatigue is difficult to occur in the piezoelectric sensor 15 and thus the lifetime enhancement of the piezoelectric sensor 15 can be attained.

### (Third Embodiment)

Next, a keyless entry system of a third embodiment according to the present invention will be explained hereunder.

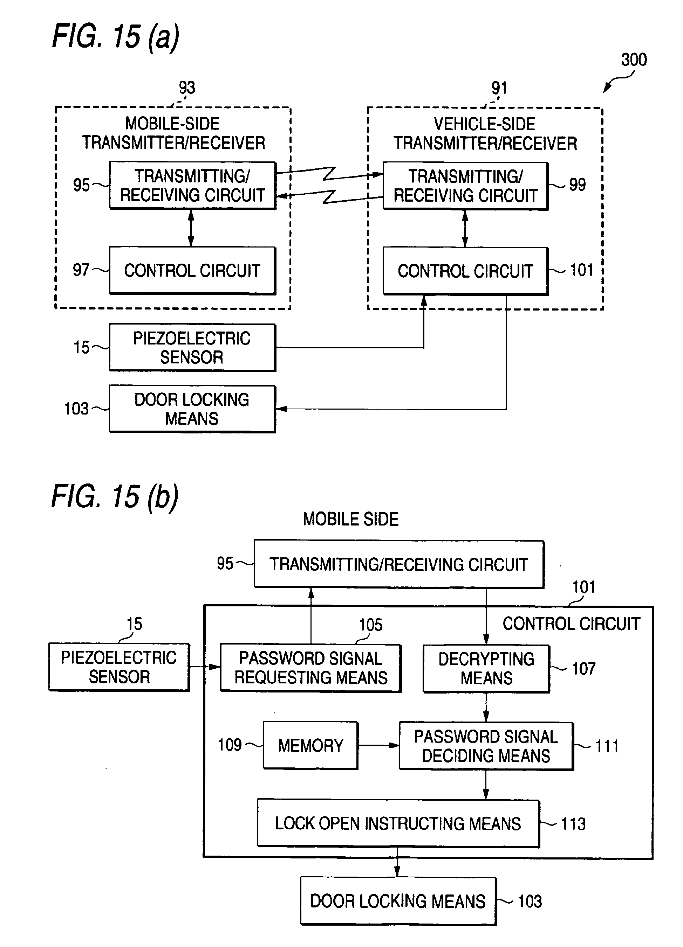

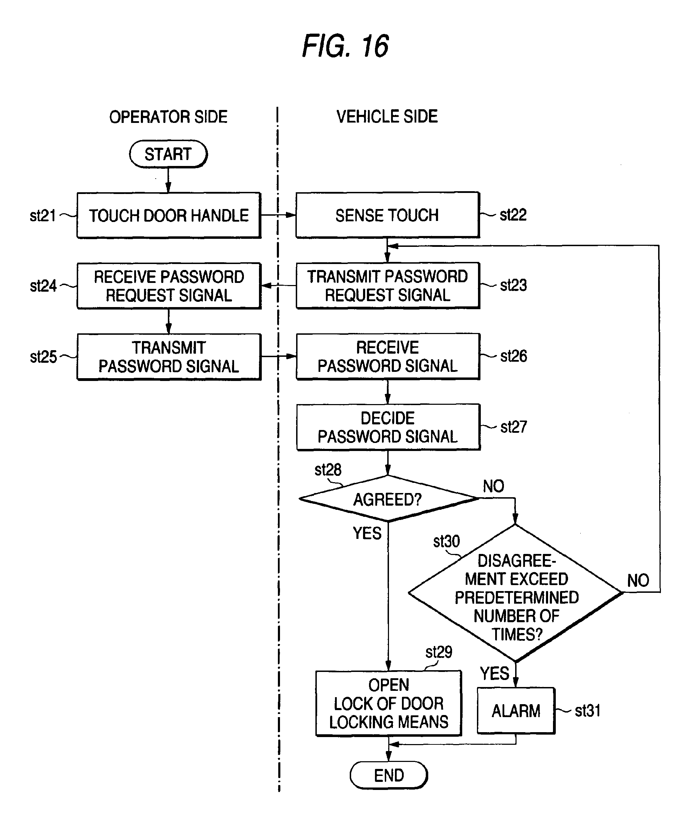

Fig.15 is block diagrams showing a keyless entry system of a third embodiment according to the present invention, wherein (a) shows a schematic configuration thereof and (b) shows a principal detailed configuration thereof. Fig.16 is a flowchart showing operational procedures in the keyless entry system shown in Fig.15.

A keyless entry system 300 includes any one of door handle devices 100, 200 explained in the first and second embodiments and their variations (for example, the door handle device 100), a transmitter/receiver 91 installed on the vehicle side shown in Fig.15(a), and a transmitter/receiver 93 carried with the operator. The keyless entry system 300 operates basically to open the lock of the door 13 when the mobile-side transmitter/ receiver 93 receives a password request signal that the vehicle- side transmitter/receiver 91 transmits and then the vehicle- side transmitter/receiver 91 receives a password signal that the mobile-side transmitter/receiver 93 transmits.

The mobile-side transmitter/receiver 93 is constructed to have a transmitting/receiving circuit 95 for transmitting/ receiving a radio wave at the same frequency as the vehicle-side transmitter/receiver 91, a control circuit 97 for controlling the vehicle-side transmitter/receiver 91, and a power supply circuit (not shown). The control circuit 97 is constructed to have a CPU (not shown) and a nonvolatile memory in which a program used to control the CPU and a password code are loaded, and causes the transmitting/receiving circuit 95 to transmit the password code loaded in the nonvolatile memory when the transmitting/ receiving circuit 95 receives a password request code transmitted from the vehicle-side transmitter/receiver 91 described later. In this case, an antenna coil (not shown) is provided to the transmitting/receiving circuit 95. Also, a primary battery such as a button cell, or the like may be employed as the power supply of the mobile-side transmitter/receiver 93, otherwise an energy induced in the antenna coil of the mobile- side transmitter/receiver 93 by a carrier wave signal transmitted from the vehicle-side transmitter/receiver 91 may be utilized.

The vehicle-side transmitter/receiver 91 is constructed to have a transmitting/receiving circuit 99 for transmitting/ receiving a radio wave at the same frequency as the mobile-side transmitter/receiver 93, and a control circuit 101 as the control portion for controlling the transmitting/receiving circuit 99. In this case, an antenna coil (not shown) is provided to the transmitting/receiving circuit 99. The piezoelectric sensor 15 of the door handle device 100 and a door locking means 103 are connected to the control circuit 101. The control circuit 101 monitors the vibration generated when the operator touches the handle 11 by the piezoelectric sensor 15, and is turned ON when a changed value exceeds a predetermined value. When the control circuit 101 is turned ON, a power supply voltage is fed to the vehicle-side transmitter/receiver 91 from the battery via a relay box (not shown).

The control circuit 101 of the vehicle-side transmitter/ receiver 91 is constructed basically to have a CPU and a nonvolatile memory in which a program used to control the CPU and a password are loaded. More particularly, as shown in Fig. 15(b), the control circuit 101 is constructed to have a password signal requesting means 105 for receiving a sensed signal from the piezoelectric sensor 15 to cause the vehicle- side transmitter/receiver 91 to transmit the password requesting signal, a decrypting means 107 for decrypting the password signal received by the vehicle-side transmitter/ receiver 91, a password signal deciding means 111 for deciding whether or not the decrypted password signal is a normal signal stored previously in a memory 109, and a lock open instructing means 113 for instructing the door locking means 103 to open the lock when the password signal is the normal signal.

In the keyless entry system 300, as shown in Fig.16, when the operator touches the handle 11 (st 21), the touch is sensed by the control circuit 101 (st 22), and then the password request signal is transmitted from the password signal requesting means 105 (st 23). When the control circuit 97 of the mobile-side transmitter/receiver 93 receives the password request signal (st 24), such control circuit causes the transmitting/receiving circuit 95 to transmit the password signal (st 25). When the control circuit 101 receives the password signal (st 26), such control circuit causes the decrypting means 107 to decrypt the password signal and causes the password signal deciding means 111 to decide the password signal (st 27). When the password signal agrees with the password signal stored in the memory 109 (st 28), the control circuit 101 causes the lock open instructing means 113 to send out a lock open signal to the door locking means 103 (st 29). In contrast, when the password signals do not agree with each other and a disagreement between the password signals is decided in excess of a predetermined number of times (st 30), an alarm is generated (st 31).

According to the keyless entry system 300 of the third embodiment, the door handle device 100 that can execute a high-sensitivity detection, that is hard to subject to the disturbance caused due to the exposure of the electrodes, and that has few constraint conditions of the installation location is equipped as the major constituent member. Since the door handle device 100 can be operated only by a light touch on the handle 11 and no stroke is needed to joint the contacts, there exists no time difference between a moment at which the operator touches the handle and a moment at which the switch starts to operate. As a result, a time required until the lock open instructing means 113 of the control circuit 101 instructs the door locking means 103 to open the lock after the operator touches the handle 11 can be reduced substantially, and also the door locking means 103 can be opened in response to the rapid door opening.

### (Fourth Embodiment)

Next, a keyless entry system of a fourth embodiment according to the present invention will be explained hereunder.

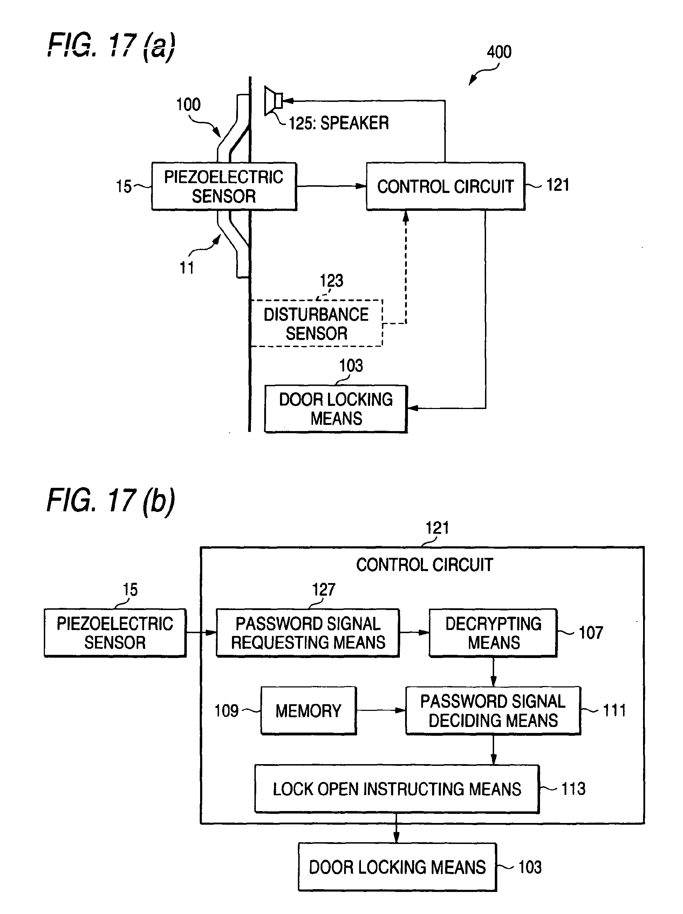

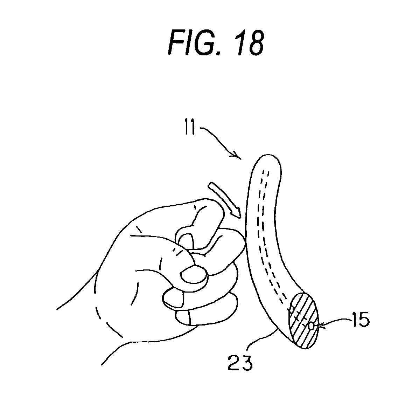

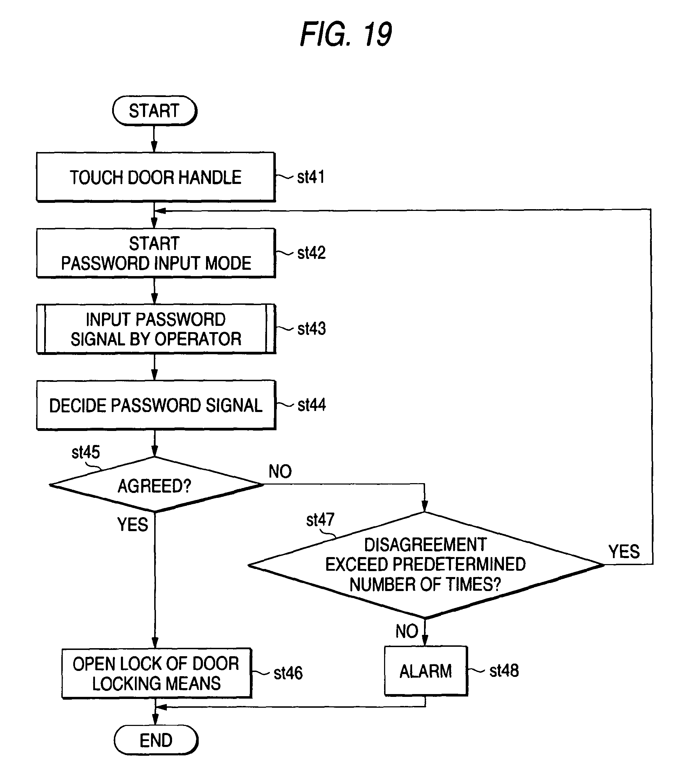

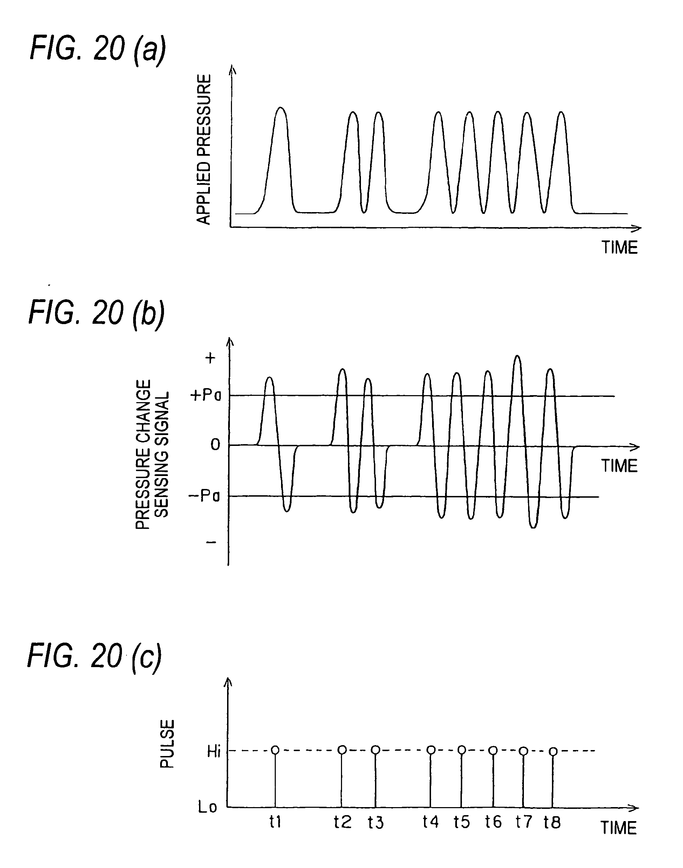

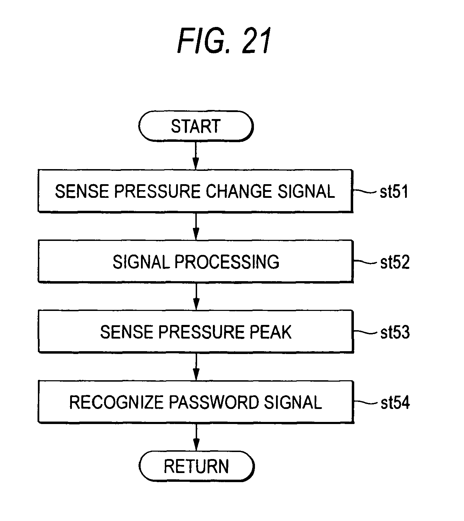

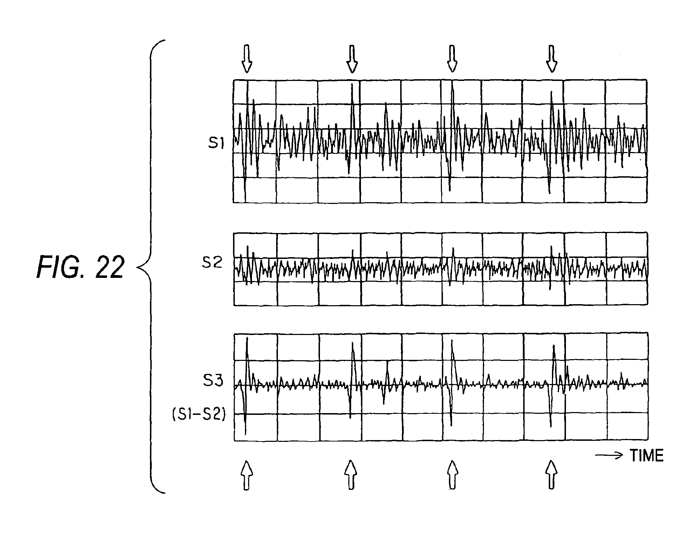

Fig.17 is block diagrams showing a keyless entry system of a fourth embodiment according to the present invention, wherein (a) shows a schematic configuration thereof and (b) shows a principal detailed configuration thereof. Fig.18 is an explanatory view showing a signal inputting method of the keyless entry system shown in Fig.17. Fig.19 is a flowchart showing operational procedures in the keyless entry system shown in Fig.17. Fig.20 is explanatory views showing correlations between a pressure applied to a door handle, a sensed signal derived from this pressure, and a pulse derived from this sensed signal. Fig.21 is a flowchart of procedures in a password signal recognizing process in the keyless entry system shown in Fig.17. Fig.22 is characteristic views showing a time transition of a signal S1 of a piezoelectric sensor, a signal S2 of a disturbance sensor, and a signal S1-S2.

A keyless entry system 400 includes any one of door handle devices 100, 200 explained in the first and second embodiments and their variations (for example, the door handle device 100), a control circuit 121 as a control portion shown in Fig.17(a), a disturbance sensor 123 connected to the control circuit 121, and a speaker 125, as basic constituent members. In this keyless entry system 300, the control circuit 121 operates to open the door locking means 103 when the operator raps the handle 11 in the predetermined number of times that is registered previously.

As shown in Fig.17(b), the control circuit 121 has a password signal inputting means 127 for receiving a touch sense signal from the piezoelectric sensor 15 to wait an input of the password signal, the decrypting means 107 for decrypting the password signal that is input into the password signal inputting means 127 from the piezoelectric sensor 15, the password signal deciding means 111 for deciding whether or not the password signal decrypted by the decrypting means 107 is a normal signal stored previously in the memory 109, and the lock open instructing means 113 for instructing the door locking means 103 to open the lock when the password signal is the normal signal.

Here, the piezoelectric sensor 15 of the door handle device 100 senses mainly the vibration generated when the operator operates the handle 11. When the vehicle is running at idle, for example, the piezoelectric sensor 15 also senses simultaneously the vibration from the engine in the sensed value. In contrast, a disturbance sensor 123 is provided to the portion of the door 13 apart from the handle 11, and senses mainly the vibration (for example, the above vibration from the engine) acting on the door 13 except the vibration caused by the operator's touch.

As shown in Fig.18, a rapping action on the handle 11 is carried out by knocking the handle main body 23, for example. That is, the vibration generated by taking a rapping action in predetermined rhythm constitutes the password signal.

In this keyless entry system 400, as shown in Fig.19, when the operator touches the handle 11 (st41), the touch is sensed by the control circuit 121 and a password input mode for the password signal inputting means 127 is started (st42). At this time, a buzzer sound to the effect that the password input mode is started is emitted from a speaker 125.

When the operator who checked the buzzer sound inputs the password signal into the password signal inputting means 127 by taking the rapping action in predetermined rhythm (st43), the control circuit 121 causes the decrypting means 107 to decrypt the password signal and then causes the password signal deciding means 111 to decide the password signal (st44).

At this time, when a pressure is applied onto the handle main body 23 by the rapping action, a pressure change signal shown in Fig.20(a) is sensed from the piezoelectric element material 31 (st51 in Fig.21). This pressure change signal is processed by the control circuit 121 (st52 in Fig.21), and gives a pressure change sensing signal shown in Fig.20(b). Then, a pressure peak is sensed from this pressure change sensing signal (st53 in Fig.21).

More particularly, the password signal is set by a peak intensity and a peak interval of a vibration waveform generated by taking the rapping action in predetermined rhythm. When the operator raps the handle main body 23 at a predetermined interval in predetermined number of times, this vibration waveform is decrypted by the control circuit 121. That is, the peculiar rapping rhythm that only the operator knows constitutes the password signal. When an amplitude of the vibration waveform |+Pa| +| -Pa| exceeds a predetermined reference level, the control circuit 121 decides that the opening closing action of the door 13 was taken, and then outputs a pulse signal Lo→Hi as a decision signal at times t1 to t8. Thus, the recognition of the password signal is completed (st54 in Fig.21).

Then, when the password signal agrees with the password signal stored in the memory 109 (st45), the control circuit 121 causes the lock open instructing means 113 to send out a lock open signal to the door locking means 103 (st46). In contrast, when the password signals do not agree with each other and a disagreement between the password signals is decided in a predetermined number of times or more (st47), an alarm is emitted (st48).

Also, in the keyless entry system 400, the disturbance sensor 123 for sensing signal components other than the sensed object signal out of the sensed signal from the piezoelectric element material 31 is provided. The noise canceling process using the disturbance sensor 123 executed in the pressure change signal sensing process (process in st51 in Fig.21) executed by the control circuit 121. That is, as shown in Fig.22, when both the vibration S2 generated by the disturbance such as the idling, or the like, for example, and the vibration generated by the handle operation are sensed by the piezoelectric element material 31 as the vibration S1, the vibration S2 generated by the disturbance is subtracted from the vibration sensed by the piezoelectric element material 31 because such vibration S2 generated by the disturbance is sensed by the disturbance sensor 123 provided to the door 13. As a result, the handle operation vibration S3 (S1-S2) from which the noise generated by the disturbance is eliminated appears, so that a sensitivity of the vibration of the handle operation can be increased.

According to the keyless entry system 400 of the fourth embodiment, when the piezoelectric sensor 15 of the door handle device 100 provided to the door 13 senses the vibration generated by the door opening operation, the control circuit 121 brings the password signal inputting means 127 into its input standby state, and the password signal can be input in this input standby state in response to the vibration sensed by the door handle device 100. When the password signal generated by the input vibration is the normal signal, the lock open instructing means 113 instructs the door locking means 103 to open the lock. Therefore, when only the door handle device 100 is provided to the door 13, the vehicle-side transmitter/receiver 91 and the mobile-side transmitter/receiver 93 are not needed.

### (Fifth Embodiment)

Next, a door handle device of a fifth embodiment according to the present invention will be explained hereunder.

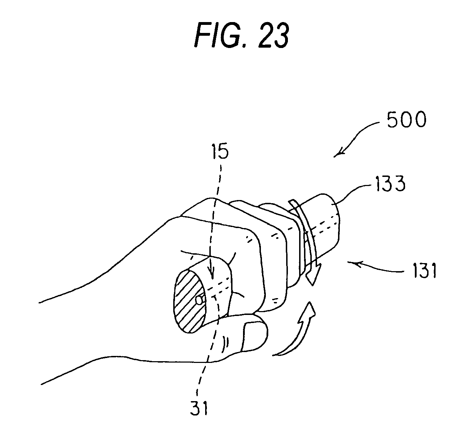

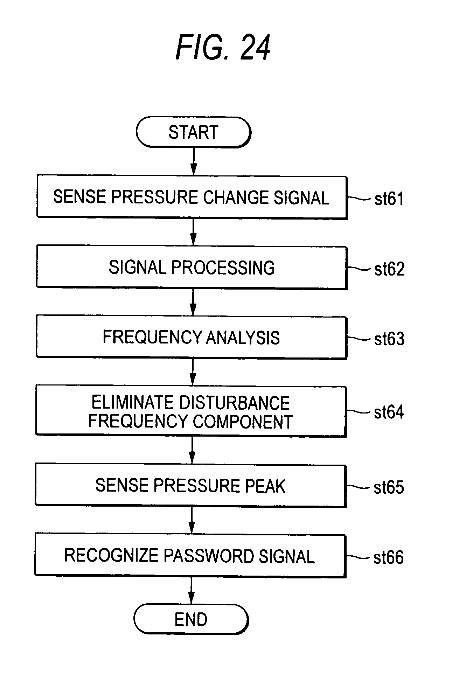

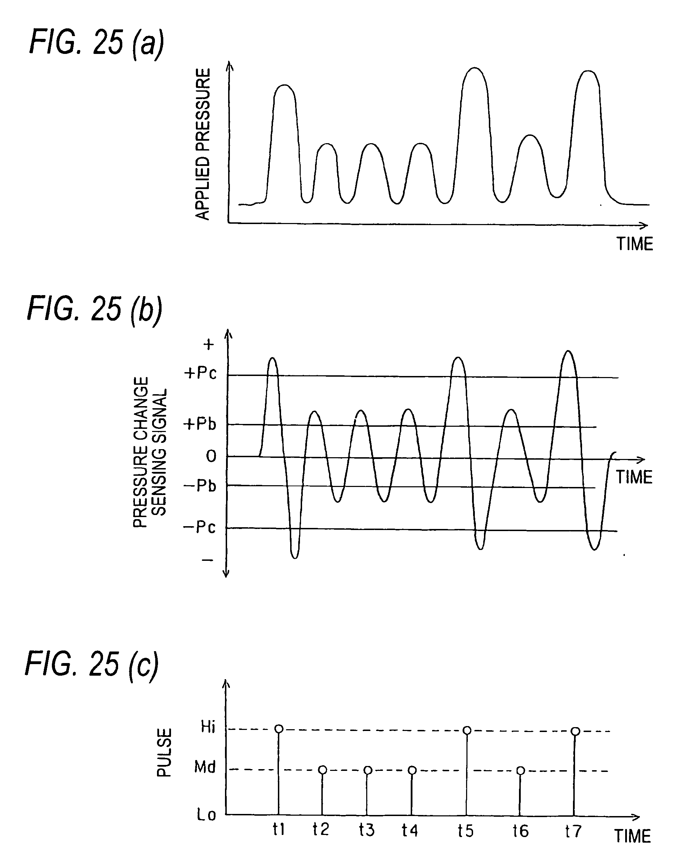

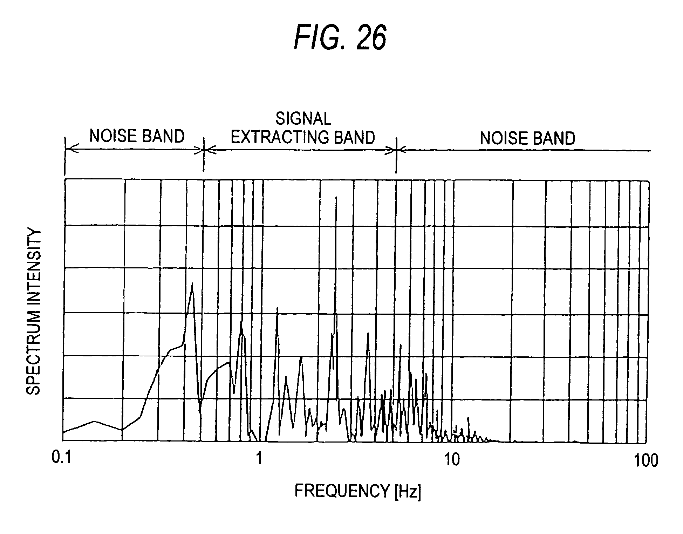

Fig.23 is an external perspective view showing a door handle device of a fifth embodiment according to the present invention. Fig.24 is a flowchart of procedures in the password signal recognizing process in the door handle device shown in Fig.23. Fig.25 is explanatory views showing correlations between a gripping force applied to a door handle, a sensed signal derived from this gripping force, and a pulse derived from this sensed signal. Fig.26 is an explanatory view of a sensed frequency containing a signal extracting band and a noise band.

In a door handle device 500 according to this embodiment, a handle 131 is of a grip type that is formed like a circular cylinder, a round column, or a cable. The operator grasps a handle main body 133 of the handle 131, and then inputs the password signal into the piezoelectric element material provided to the inside by changing a gripping pressure at a predetermined interval in a predetermined number of times or turning the handle main body 133 around the axis line. The control circuit similar to the control circuit 121 employed in the keyless entry system 400 can be employed in this door handle device 500. It is preferable that the disturbance sensor 123 and the speaker 125 should also be connected.

Therefore, in this door handle device 500, as shown in Fig.24, when the operator grasps the handle 131, a password input mode to the password signal inputting means 127 is started by the control circuit 121. At this time, the buzzer sound informing the effect that the password input mode is started is emitted from the speaker 125.

When the operator who knows the buzzer sound grasps the handle 131 in a predetermined rhythm, the password signal inputting means 127 senses a pressure change signal (st61), and executes the signal processing (st62). That is, when the applied pressure shown in Fig.25(a) is sensed by the piezoelectric element material 31, and then the pressure change sensing signal shown in Fig.25(b) is sensed. Then, the frequency analysis is applied to this pressure change sensing signal by the control circuit 121 (st63).

At this time, the control circuit 121 executes a disturbance frequency component eliminating process (st64). In this case, a frequency obtained by the gripping action is set previously as a signal extracting frequency band (for example, about 0.5 to 5.5 Hz) shown in Fig.26, and remaining frequencies are sensed by the disturbance sensor 123 as a noise frequency band. Therefore, the pressure change sensing signal being output from the control circuit 121 is given as a signal in which the frequency in the noise frequency band obtained by the disturbance sensor 123 is removed from the frequency obtained by the piezoelectric element material 31.

Then, the pressure peak is detected from this pressure change sensing signal. In the present embodiment, the pressure peak is separated into two threshold values | +Pb| +| -Pb| and |+Pc| +|-Pc| (st65).

The password signal is set based on a peak intensity and a peak interval of the vibration waveform generated in a predetermined gripping rhythm. When the operator grasps the handle main body 133 at a predetermined interval in a predetermined number of times, this vibration waveform is decrypted by the control circuit 121. That is, the peculiar gripping rhythm that only the operator knows constitutes the password signal. When an amplitude of the vibration waveform is higher than a predetermined reference level, the control circuit 121 decides that the operation of the handle 131 was executed, and then outputs either of two type pulse signals Lo→Md and Lo→Hi as a decision signal at times t1 to t7, as shown in Fig.25(c). Accordingly, the recognition of the password signal is completed (st66).

Then, when the password signal agrees with the password signal stored in the memory 109, the control circuit 121 causes the lock open instructing means 113 to send out the lock open signal to the door locking means 103. In contrast, when the password signals do not agree with each other and a disagreement between the password signals is decided in a predetermined number of times or more, an alarm is emitted (st48).

According to the door handle device 500 of the fifth embodiment, when the operator grips the handle main body 133 at a predetermined interval in a predetermined number of times or more, this waveform is decrypted by the control circuit 121. When this gripping action coincides with a predetermined action, the lock of the door locking means 103 is opened by the control circuit 121. That is, the peculiar gripping rhythm that only the operator knows constitutes the password signal.

Also, in the present configuration, because the password signal is input by the gripping action, it is extremely difficult for a third person except the operator to look at the password signal inputting action with the eyes. Thus, a third person cannot input illegally the password signal by intercepting the operator's inputting action.

### (Sixth Embodiment)

Next, a door handle device of a sixth embodiment according to the present invention will be explained hereunder.

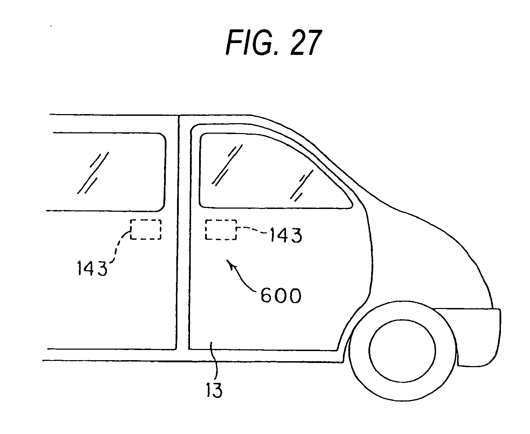

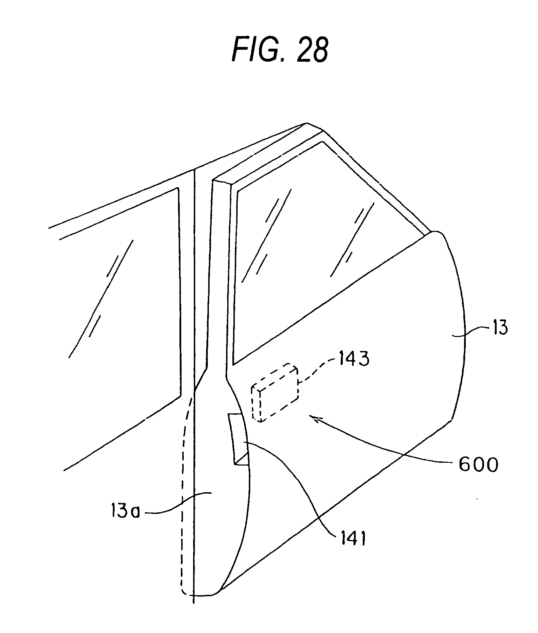

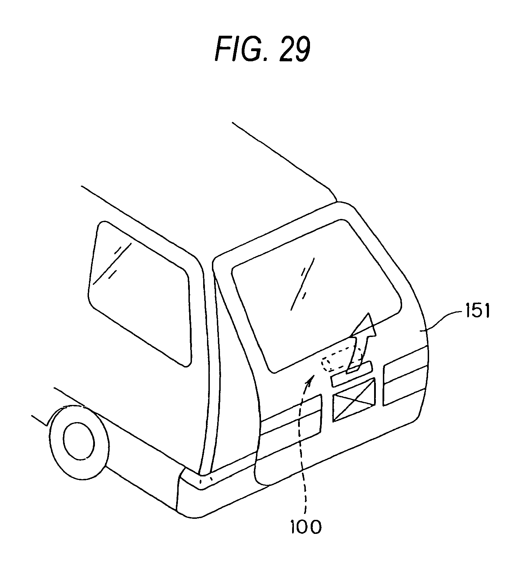

Fig.27 is an external view of a door portion of a vehicle equipped with a door handle device of a sixth embodiment according to the present invention. Fig.28 is a perspective view of a door not fully closed, from which the handle appears. Fig.29 is a perspective view of a hatch back door to which the door handle device is provided.

In a door handle device 600, a handle 141 is arranged in a position (for example, a side surface 13a of the door 13) that the handle 141 is hidden behind the outer surface of the door 13 when the door locking means 103 is shut whereas the handle 141 appears when the door locking means 103 is opened (for example, with the door not fully closed after the door lock is opened). Then, a vibration sensing portion (sensing portion) 143 having the piezoelectric sensor 15 is hidden in any position of the door 13. The control circuit similar to the control circuit 121 employed in the keyless entry system 400 can be employed as the vibration sensing portion 143. It is preferable that the disturbance sensor 123 and the speaker 125 should also be connected.

According to the door handle device 600 of the sixth embodiment, the handle 141 used to open/close the door 13 is arranged on the side surface portion of the door 13, for example, and thus is not exposed to the outer surface in a state that the door 13 is closed. When the password signal is input into the handle 141 covered with a door outer surface in this manner by rapping the vibration sensing portion 143 from the door outer surface, or the like, the piezoelectric sensor 15 senses the vibration in a situation that the handle 141 is hidden and then the lock of the door locking means 103 is opened by the control circuit 121. Accordingly, the door 13 is opened up to its half-opened state and then the door 13 can be fully opened by the exposed handle 141. In contrast, even though the password signal is input by rapping a location of the door outer surface except the location where the vibration sensing portion 143 is arranged, or the like, the vibration sensing portion 143 does not normally operate due to an attenuation of a signal during the propagation, and thus the door 13 cannot be brought into its half-opened state. Therefore, the password signal can be input from the personal location that only the operator knows.

In the above embodiments, the case where the door handle device is applied to the door of the vehicle such as the side door, the slide door, or the like is explained by way of example. In addition, when the door handle device according to the present invention (for example, the door handle device 100) is applied to a hatch door 151 shown in Fig.29 and used to open/close the rear portion of the vehicle, such door handle device can achieve the similar advantages.

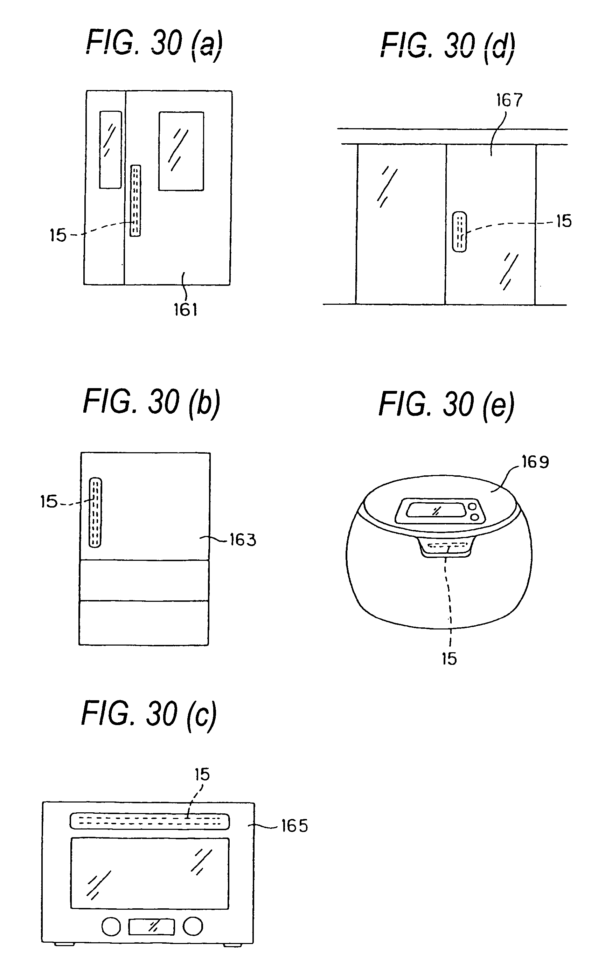

Further, in the above embodiments, the case where the door handle device is applied to the door of the vehicle is explained by way of example. In addition, the door handle device according to the present invention may be employed as an entrance door 161 of an office, a house, an apartment building, or the like shown in Fig.30(a), a door 163 of a refrigerator shown in Fig.30(b), a door 165 of a heating cooker shown in Fig.30(c), an automatic door 167 shown in Fig.30(d), or a lid 169 of an electric rice cooker shown in Fig.30(e). In this event, the advantages of enhancing the operation feeling, the operational reliability, and the fitting performance can be attained.

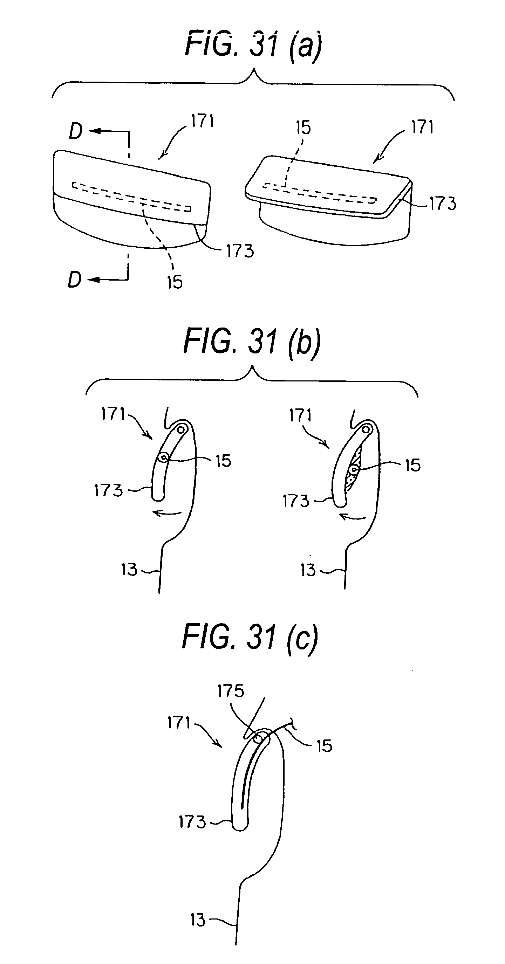

Besides, in the above embodiments, the pull-rise type handle one side of which acts as a hinge is explained by way of example. As shown in Fig.31(a), the door handle device according to the present invention can achieve the similar advantages when such door handle device is applied to a pull-up type handle 171 the overall handle of which is pulled up. In this case, the piezoelectric sensor 15 may be fitted to the inside of a handle main body 173, as shown in Fig.31 (b), may be pasted onto a door opposing surface of the handle main body 173, or may be bridged to extend between the handle main body 173 and the door 13 while contacting a supporting shaft 175 of the handle main body 173, as shown in Fig.31(c).

### (Seventh Embodiment)

Next, an embodiment in which a door opening/closing system according to the present invention is fitted into a vehicle door will be explained hereunder.

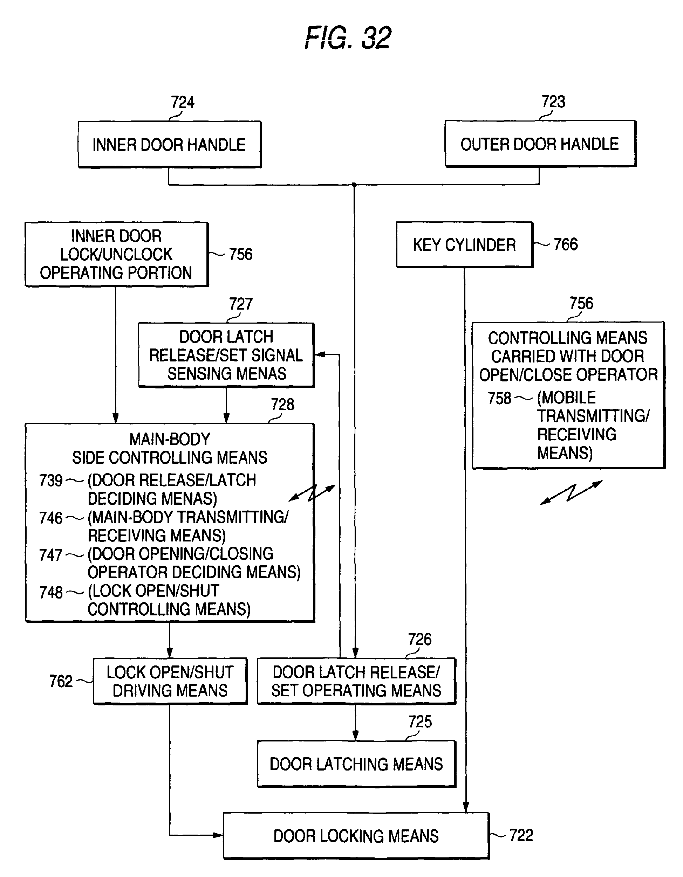

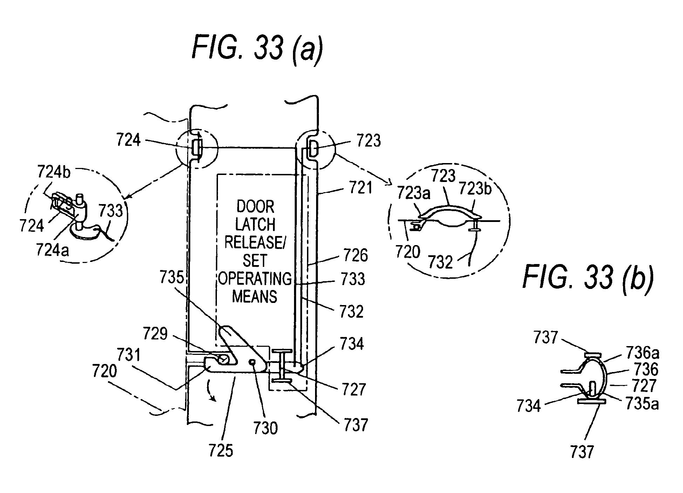

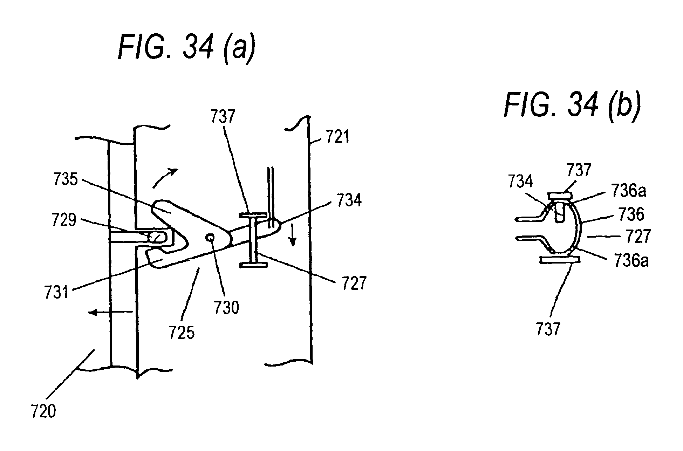

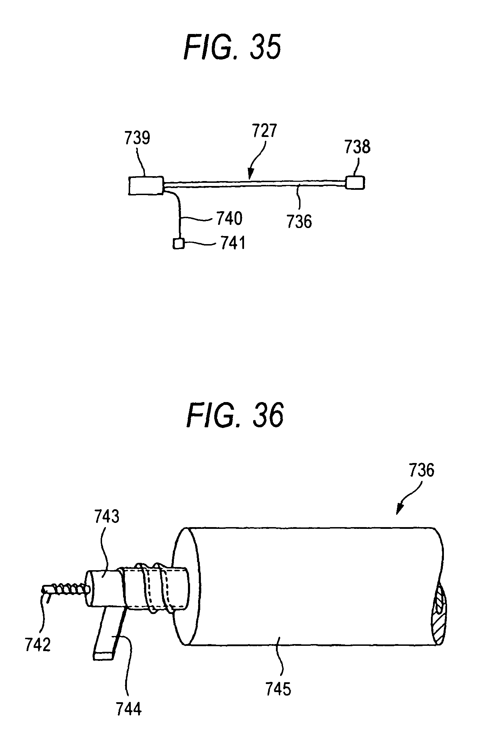

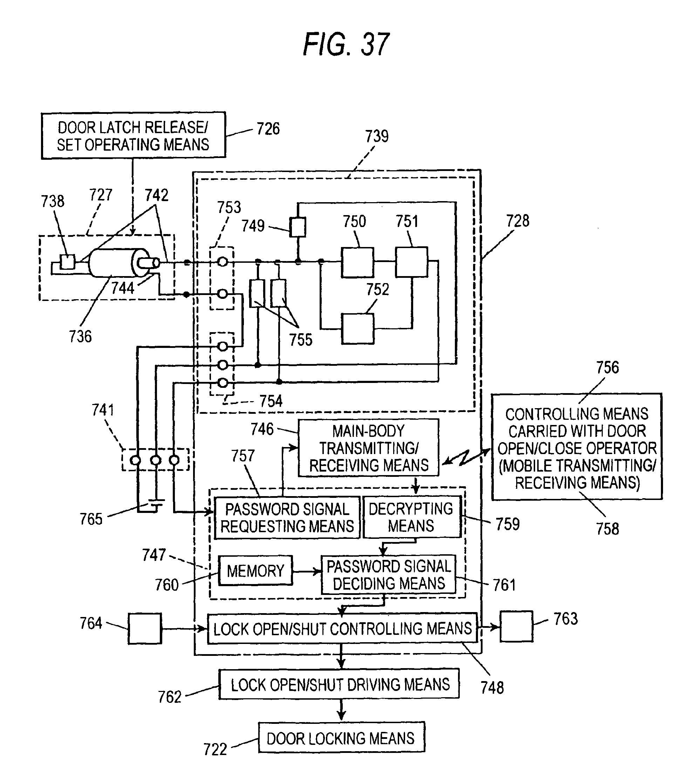

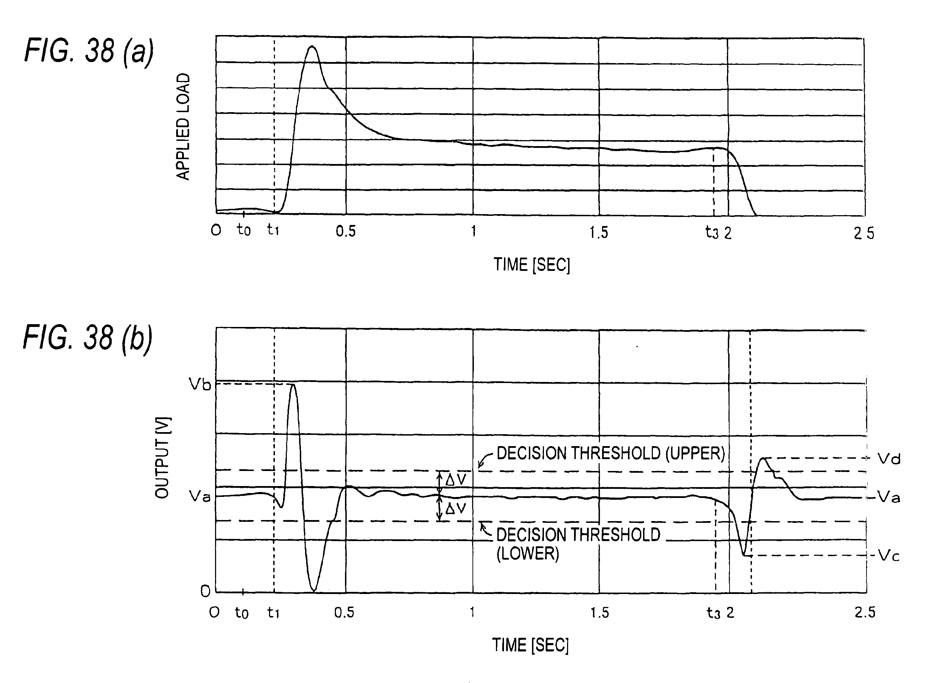

Fig.32 is a block diagram of an embodiment in which a door opening/closing system and a keyless entry system according to the present invention are installed into a vehicle door. Fig.33(a) is a schematic configurative view of a door latching means portion when the door is closed, and Fig.33(b) is a view of a release/set sensing portion of the door latching means. Fig.34(a) is a schematic configurative view of the door latching means portion when the door is opened, and Fig.34(b) is a view of the release/set sensing portion of the door latching means. Fig.35 is a configurative view of a unit containing a piezoelectric element material for sensing the opening/closing of the door. Fig.36 is a configurative view of the piezoelectric element material in the door opening/closing system. Fig.37 is a control block diagram of the keyless entry system using the door opening/closing system shown in Fig.32. Fig.38(a) is a view of a bending load applied to the piezoelectric element material in the door opening/closing system, and Fig.38(b) is a characteristic view of an output of the piezoelectric element material being output in response to the bending load.

A main body 720 as a car body of the car has a door 721 opened/closed on one end portion as a fulcrum in getting on and off, and a door locking means 722 for locking the door such that the door 721 is not opened by itself from the door 721. An outer door handle 723 and an inner door handle 724 gripped with the hand to open/close the door 721 in getting on and off the main body 720, and a door latching means 725 provided to the inside of the door 721 to latch releasably the door 721 on the main body 720 are provided to the door 721.

The door opening/closing system of the seventh embodiment according to the present invention has the outer door handle 723 and the inner door handle 724, the door locking means 722, and the door latching means 725, as described above, and also has a door latch release/set operating means 726 for releasing/ setting the door latching means 725 in cooperation with the operation applied from the outer side or the inner side to open/close the door 721, a door latch release/set signal sensing means 727 for sensing the operation of the door latch release/ set operating means 726, and a main-body side controlling means 728 operated by a sensed signal of the door latch release/set signal sensing means 727 to control the open and shut of the door locking means 722 when the door opening/closing operation is executed by the normal operator.

The outer door handle 723 is used to open the door 721 in such a way that, as shown in Fig.33(a), the other end portion 723b is gripped and pulled outward while being turned on one end portion 723 a as a fulcrum against an elastic force to release the door latching means 725. Also, the inner door handle 724 is used to open the door 721 in such a way that, as shown in Fig.33(a), the other end portion 724b is pulled outward while being turned on one end portion 724a as a fulcrum against the elastic force to release the door latching means 725.

The door latching means 725 is constructed by a U-shaped holder 729 secured to the main body 720, and an L-shaped hook 731 turned vertically around a pivot 730 provided to one end portion and then turned quickly to latch and unlatch the U-shaped holder 729 when passed through a certain turning position, for example. The door latching means 725 releases and sets the latch in cooperation with the outward operation applied by the outer door handle 723 or the inward operation applied by the inner door handle 724 to open/close the door 721.

Also, the door latching means 725 has an outer wire 732 and an inner wire 733 whose one end portions are coupled to the outer door handle 723 and the inner door handle 724 to cooperate with the door opening/closing operation from the outer side or the inner side, for example, a lever 734 connected to the other end portions of the outer wire 732 and the inner wire 733 and provided integrally with the other end portion of the L-shaped hook 731 on the pivot 730, a cam 735 provided integrally to oppose to the L-shaped hook 731, and the like. The door latching means 725 is coupled to the outer door handle 723 and the inner door handle 724 via the door latch release/set operating means 726 provided to the inside of the door 721.

More particularly, as shown in Fig.33(a), the door latching means 725 is constructed such that, when the outer door handle 723 is grasped and pulled to turn the door in a situation that the door 721 closes the main body 720 and the L-shaped hook 731 is latched on the U-shaped holder 729, the lever 734 is pulled up around the pivot 730 via the outer wire 732, then the L-shaped hook 731 is moved downward as indicated by an arrow and released from the U-shaped holder 729, and then the door 721 can be opened as shown in Fig.34(a).

Similarly, like the above, as shown in Fig.33(a), the door latching means 725 is constructed such that, when the inner door handle 724 is grasped and pulled to turn the door in a situation that the door 721 closes the main body 720 and the L-shaped hook 731 is latched on the U-shaped holder 729, the lever 734 is pulled up around the pivot 730 via the inner wire 733, then the L-shaped hook 731 is moved downward as indicated by an arrow and released from the U-shaped holder 729, and then the door 721 can be opened as shown in Fig.34(a). In this case, the outer wire 732 and the inner wire 733 are constructed such that the other of them does not influence on the above operation while one of them is being operated.

Further, as shown in Fig.34(a), the door latching means 725 is constructed such that, when the outer door handle 723 is grasped and closed to push the door 721 toward the main body 720 in a situation that the door 721 opens the main body 720 and the L-shaped hook 731 is released from the U-shaped holder 729, the cam 735 comes into contact with the U-shaped holder 729 and pushes it upward indicated with an arrow around the pivot 730 and correspondingly the L-shaped hook 731 is latched on the U-shaped holder 729 while turning upward, and then the door 721 closes the main body 720 as shown in Fig.33(a). Of course, the door latching means 725 takes the same operation as above when the inner door handle 724 is grasped to pull the opened door 721 toward the main body 720 and close it. The door latching means 725 is constructed not to have the influence on the operations of the outer wire 732 and the inner wire 733 when the door is closed from the outer side and the inner side.

The door latch release/set signal sensing means 727 employs one cable-like piezoelectric element material 736 to sense the door opening/closing operation from the outer side and the inner side with high sensitivity, and is provided to the inside of the door 721 to receive an acceleration by the action of the door latch release/set operating means 726. This door latch release/set operating means 726 releases and sets the door latching means 725 in response to the operation of the outer door handle 723 and the inner door handle 724.

In other words, the door latch release/set signal sensing means 727 is arranged to accept the deformation from the lever 734, which constitutes the door latch release/set operating means 726 as a common portion that cooperate with the door opening/closing operations applied from the outer side and the inner side respectively, at two positions, i.e., the door latch release position including the intermediate position to release the door latching means 725 (the position shown in Fig.34(b)) and the door latch set position including the intermediate position to set the door latching means 725 (the position shown in Fig.33(b)), and to generate an electric signal.

Then, the door latch release/set signal sensing means 727 is arranged such that a plurality of bended portions 736a to which a tension is applied in advance are provided to the piezoelectric element material 736 to enhance further a sensitivity of the release/set of the door latching means 725, and each bended portion 736a is arranged to the door latch release position including the intermediate release in the operation of the door latching means 725 (the position shown in Fig.34(b)) and the door latch set position including the intermediate set in the operation of the door latching means 725 (the position shown in Fig.33(b)) to receive the deformation from the lever 734. A holder 737 receives the piezoelectric element material 736 and accepts the deformation by the lever 734 without fail.

As shown in Fig.35, the door latch release/set signal sensing means 727 constitutes a unit by the cable-like piezoelectric element material 736 having a predetermined length, a disconnection sensing resistor 738 connected to one end of the piezoelectric element material 736, a door release/latch deciding means 739 connected to the other end of the piezoelectric element material 736, a cable 740 connected to the door release/latch deciding means 739, and a connector 741 connected to a top end of the cable 740.

The cable 740 connected to the door release/latch deciding means 739 is provided to feed a power supply voltage and output a sensed signal, and connected a power supply and a communication terminal via the connector 741 provided to its top end.

The cable-like piezoelectric element material 736 used in the door latch release/set signal sensing means 727 has a structure shown in Fig.36, and is constructed by a center electrode 742 arranged in the center portion in the axial direction, a piezoelectric element material 743 made of piezoelectric ceramics to cover the periphery of the center electrode 742, an outer electrode 744 arranged on the periphery of the piezoelectric element material 743, and a covering layer 745 made of a vinyl chloride resin to cover the outermost periphery.

This cable-like piezoelectric element material 736 has the excellent flexibility and generates an output signal in response to a deformation acceleration during the deformation. As the piezoelectric ceramics as the piezoelectric element material 743, the sintered powder such as lead titanate or lead titanate zirconate or the non-lead-based piezoelectric ceramics sintered powder such as sodium niobate, or the like, for example, is employed.

Also, in the piezoelectric element material 736, a resin material developed originally by the applicant, an available temperature of which can be set up to 120 °C and which has a thermal resistance, is used as the piezoelectric element material 743, and can be used at a higher temperature range (120 °C or less) than 90 °C that is the highest available temperature of the typical polymer piezoelectric element material (monoaxial stretched poly(vinylidene fluoride)) or piezoelectric element material (piezoelectric element material consisting of chloroprene and piezoelectric ceramic powders) in the prior art. Also, the piezoelectric element material 45 is constructed by a resin having a flexible characteristic and the piezoelectric ceramics, and a flexible electrode consisting of a coil-like metal center electrode 742 and a film-like outer electrode 744 are used, and the piezoelectric element material 743 has a flexible characteristic equivalent to the normal vinyl cord.

The piezoelectric element material 743 is constructed by a composite material of a resin-based material and the piezoelectric ceramic powders of 10 µm or less. The vibration sensing characteristic and the flexible characteristic are realized by the ceramics and the resin respectively. The piezoelectric element material 743 developed originally by the applicant employs chlorinated polyethylene as the resin-based material, so that a high heat resistance (120 °C) and the easily-formable flexibility can be implemented and also simple manufacturing steps that do not need the crosslinking can be realized.

The cable-like piezoelectric element material 736 obtained in this manner does not have a piezoelectric performance just after the piezoelectric element material 743 is molded. Therefore, a process of affixing the piezoelectric performance to the piezoelectric element material 743 (polarizing process) must be executed by applying a DC high voltage of several kV/mm to the piezoelectric element material 743.

In case a minute defect such as a crack, or the like resides in the piezoelectric element material 45, both electrodes are easily short-circuited via a discharge occurred at this defect portion and therefore an enough polarizing voltage cannot be applied. In the present invention, since the unique polarizing step using an auxiliary electrode that can be adhered closely to the piezoelectric element material 743 in a predetermined length is established, the polarization can be stabilized by sensing/avoiding the defect, so that the long piezoelectric cable in excess of several tens m can be obtained.

Also, in the piezoelectric element material 736, the coil-like metal center electrode and the film-like electrode (three-layered laminate film consisting of aluminum-polyethylene terephthalate-aluminum) are used as the center electrode 742 and the outer electrode 744 respectively. Accordingly, an adhesiveness between the piezoelectric element material743 and the electrode can be ensured and also the connection of the external lead wire can be facilitated, and thus the flexible cable-like packaging structure can be constructed.

The center electrode 742 is formed of the copper-silver alloy coil, the outer electrode 744 is formed of the three- layered laminate film consisting of aluminum-polyethylene terephthalate-aluminum, the piezoelectric element material743 is formed of the polyethylene resin and the piezoelectric ceramic powders, and a covering layer 745 is formed of the thermoplastic plastics. As a result, a relative dielectric constant is 55, a quantity of generated charge is 10 to 13 C (coulomb)/gf, and a highest available temperature is 120°C.

The above piezoelectric element material 736 is manufactured by following steps by way of example. At first, a chlorinated polyethylene sheet and piezoelectric ceramic (here, lead titanate zirconate) powders of 40 to 70 volume % are mixed uniformly like a sheet by the roller method. The piezoelectric element material 743 is formed by cutting this sheet finely into pellets and then extruding continuously these pellets together with the center electrode 742. Then, the polarizing process is executed by bringing the auxiliary electrode into contact with the outer periphery of the piezoelectric element material 743 and then applying a high voltage between the auxiliary electrode and the center electrode 742. Then, the outer electrode 744 is wound around the piezoelectric element material 743. Also, the covering layer 745 is extruded continuously to cover the outer electrode 744.

It is preferable that, when the piezoelectric ceramics powders are added to the chlorinated polyethylene, such piezoelectric ceramics powders should be dipped into a titanium-coupling agent solution and dried previously. The surfaces of the piezoelectric ceramics powers are covered with the hydrophilic group and the hydrophobic group contained in the titanium-coupling agent by this process.

The hydrophilic group prevents an aggregation of the piezoelectric ceramics powders, and the hydrophobic group increases a wettability of the chlorinated polyethylene and the piezoelectric ceramics powders. As a result, a large amount of piezoelectric ceramics powders can be added uniformly into the chlorinated polyethylene up to a maximum of 70 volume %. It is found that the same effect as the above can be attained by adding the titanium-coupling agent when the chlorinated polyethylene and the piezoelectric ceramics powders are rolled, in place of the dipping in the titanium-coupling agent solution. This process is excellent in such a respect that the dipping process in the titanium-coupling agent solution is not needed particularly. In this manner, the chlorinated polyethylene bears a role of a binder resin when the piezoelectric ceramics powders are mixed.

In the case of the present embodiment, a single-wire conductor made of copper-based metal is employed as the center electrode 742. Also, a stripe electrode in which an aluminum metal film is adhered onto a polymer layer is employed as the outer electrode 747, and this stripe electrode is wound around the piezoelectric element material 743. Since the electrode constructed by adhering an aluminum thin film onto the polyethylene terephthalate as the polymer layer can be commercially mass-produced inexpensively, such electrode is preferable as the outer electrode 744. This electrode can be connected to the door release/latch deciding means 739 by a caulking or an eyelet, for example.

Also, a metal single-wire coil or a metal mesh wire may be soldered around the aluminum thin film of the outer electrode 744 to be connected to the door release/latch deciding means 739. An improvement in a working efficiency can be achieved because the soldering can be applied.

In this case, in order to shield the piezoelectric element material 736 from the electrical noise in the external environment, preferably the outer electrode 744 should be wound on the outer periphery of the piezoelectric element material 743 to partially overlap mutually. As the covering layer 745, the rubber material that is superior in a heat-insulating property and a water proofing property to the above vinyl chloride resin may be employed. It is preferable that the rubber material having a higher flexibility than the piezoelectric element material 743 should be employed such that the piezoelectric element material 743 can be readily deformed by a pushing force applied by the contacted article. The covering layer should be selected by taking a thermal resistance and a cold resistance in account as the onboard parts, and preferably the rubber material a degradation of the flexibility of which is small in a range of -30 °C to 85 °C should be selected particularly. As such rubber material, for example, ethylene-propylene rubber (EPDM), chloroprene rubber (CR), butyle rubber (IIR), silicon rubber (Si), thermoplastic elastomer, or the like may be employed. With the above configuration, a minimum curvature of the piezoelectric element material 733 can be reduced to a radius of 5 mm, and also excellent heat-insulating property and water proofing property can be ensured in contrast to the vinyl chloride.

As described above, the piezoelectric element material 743 of the piezoelectric element material 736 has both the flexibility that the chlorinated polyethylene possesses and the high-temperature durability that the piezoelectric ceramics possesses. Therefore, such advantaged can be achieved that a sensitivity reduction caused in the conventional piezoelectric sensor that uses the poly(vinylidene fluoride) as the piezoelectric member is not generated at a high temperature, the high-temperature durability is excellent, and a production efficiency is improved because the vulcanizing step required for the rubber such as EPDM is not needed in the molding step.

As described above, the door latch release/set signal sensing means 727 is arranged on the outer periphery of the lever 734 such that the piezoelectric element material 743 of the piezoelectric element material 736 is deformed by the vertical displacement of the lever 734 of the door latch release/set operating means 726, which is accompanied with the opening/ closing operation of the outer door handle 723 and the inner door handle 724. Then, the lever 734 when displaced pushes the outer peripheral surface of the piezoelectric element material 736 and produces a deformation in the piezoelectric element material 743.

The disconnection sensing resistor 738 connected to one end of the piezoelectric element material 736 is connected between the center electrode 742 of the piezoelectric element material 736 and the outer electrode 744, and is also used as a discharging portion that discharges the charges being generated in the piezoelectric element material 736 by a pyroelectric effect. Thus, the parts are rationalized.

The main-body side controlling means 728 for capturing the sensed signal of the piezoelectric element material 736 consists of a microcomputer having CPU and a nonvolatile memory in which a program for controlling the CPU and the password code are loaded, and its peripheral circuits. A program of executing all control sequences to carry out the operation of the door opening/closing device is built in the controlling means 728. As shown in Fig.32, the main-body side controlling means 728 includes the door release/latch deciding means 739 for receiving a signal of the door latch release/set signal sensing means 727 that senses the release and the set of the door latching means 725, the main-body transmitting/receiving means 746, the door opening/closing operator deciding means 747, and a lock open/shut controlling means 748, and constitutes the keyless entry system.

As shown in Fig.37, the door release/latch deciding means 739 decides the signal that senses the release and the set of the door latching means 725 following upon the opening/closing operation of the door 721 from the output signal of the piezoelectric material 736. That is, the door release/latch deciding means 739 includes a voltage-dividing resistor 749 used to sense a disconnection of the piezoelectric element material 736, a filter portion 750 for passing only a predetermined frequency component from the output signal of the piezoelectric material 736, a deciding portion 751 for deciding a touch of the article to the piezoelectric material 736 based on an output signal of the filter portion 750, and an abnormality deciding portion 752 for deciding a disconnection failure of the center electrode 742 and the outer electrode 744 based on a voltage value produced by disconnection sensing resistor 738 and the voltage-dividing resistor 749.

Also, the signal inputting portion 753 of the door release/latch deciding means 739 connects the center electrode 742 and the outer electrode 744 to the door release/latch deciding means 739 to input the output signal of the piezoelectric element material 736 into the door release/latch deciding means 739. Also, the signal outputting portion 754 outputs the decision signal from the deciding portion 751. A power supply line and a ground line to be connected to the door release/latch deciding means 739 are also connected to the signal outputting portion 754. Also, the door release/latch deciding means 739 has a bypass portion 755 such as a capacitor that is provided between the signal inputting portion 735 and the signal outputting portion 754 to bypass a high-frequency signal, or the like.

The filter portion 750 has such a filtering characteristic that an unnecessary signal generated due to a vibration, or the like of a car body of a car can be eliminated from the output signal of the piezoelectric element material 736 and only a peculiar frequency component appearing in the output signal of the piezoelectric element material 736 when the piezoelectric element material 736 is deformed by a pushing pressure generated by a touch of the foreign matter can be extracted. The decision of the filtering characteristic may be optimized by analyzing the vibration characteristic of the car body of the car and the car body vibration during the running.

In order to eliminate the external electrical noise, the overall door release/latch deciding means 739 is covered with a shielding member and is electrically shielded. Also, the outer electrode 744 is electrically connected to the shielding member of the door release/latch deciding means 739, and the piezoelectric element material 736 is also electrically shielded. In this case, the strong electric field measure may be applied to the input/output portions of the above circuits by attaching a feedthrough capacitor, an EMI filter, or the like.

As shown in Fig.37, the door opening/closing operator deciding means 747 includes a password signal requesting means 757 for requesting the controlling means 756 carried with a door open/close operator to send a password signal requesting signal via the main-body transmitting/receiving means 746 in response to a decision signal of, a decrypting means 759 for decrypting the password signal that the controlling means 756 carried with a door open/close operator transmits via a mobile transmitting/receiving means 758, and a password signal deciding means 761 for deciding whether or not the password signal decrypted by the decrypting means 759 agrees with the normal password signal set previously and stored in a memory 760.

Then, the lock open/shut controlling means 748 controls an operation of a lock open/shut driving means 762 to open and shut the door locking means 722 when the password signal decided by the password signal deciding means 761 coincides with the normal password signal.

Also, an informing means 763 for informing of a decision result of the door release/latch deciding means 739 by a predetermined light provided to a front panel in the interior, or the like, and a manual inner door open/shut operating portion 764 for opening/shutting the door locking means 722 to open/close the door 721 are connected to the lock open/shut controlling means 748. Also, a power supply 765 constructed by a battery of the car to supply a power via the door release/latch deciding means 739, or the like is provided.

The above keyless entry system operates basically in such a way that, when controlling means 756 carried with the door open/close operator as the mobile-side transmitter/receiver receives the password request signal that is transmitted by the main-body side controlling means 728 as the main-body side transmitter/receiver and then the main-body side controlling means 728 receives the transmitted password signal, the lock of the door 721 is opened or opened/shut.

The controlling means 756 carried with the door open/close operator is constructed to have a mobile transmitting/receiving means 758 for transmitting/receiving a radio wave at the same frequency as the main-body transmitting/ receiving means 746, a controlling means (not shown) for controlling the mobile transmitting/receiving means 758, and a power supply circuit (not shown). The controlling means 756 carried with the door open/close operator is constructed to have a controlling means (not shown) for controlling the mobile transmitting/receiving means 758, a CPU, and a nonvolatile memory in which a program used to control the CPU and a password code are loaded. When the mobile transmitting/receiving means 758 receives the password request code from the password signal requesting means 757 of the main-body side controlling means 728, the controlling means 756 carried with the door open/close operator causes the mobile transmitting/receiving means 758 to transmit the password code loaded in the nonvolatile memory. In this case, antenna coil (not shown) is provided to the mobile transmitting/receiving means 758.

Also, a primary battery such as a button cell, or the like may be employed as the power supply of the controlling means 756 carried with a door open/close operator, otherwise an energy induced in the antenna coil of the mobile transmitting/ receiving means 758 by a carrier wave signal transmitted from the main-body transmitting/receiving means 746 may be utilized.

The main-body transmitting/receiving means 746 of the main-body side controlling means 728 transmits/receives a radio wave at the same frequency as the controlling means 756 carried with the door open/close operator, and an antenna coil (not shown) is provided. As shown in Fig.32 and Fig.37, the piezoelectric element material 736 as the door latch release/ set signal sensing means, which senses the release and the set of the door latching means 725 by the door latch release/set operating means 726 that cooperates with the opening/closing operation of the door 721, and the door locking means 722 are connected to the main-body side controlling means 728.

The main-body side controlling means 728 monitors the release and set of the door latching means 725, which is generated when the normal door opening/closing operator executes the opening/closing operation of the door 721, by the piezoelectric element material 736, and is turned ON when a changed value exceeds a predetermined value. Thus, a power supply voltage is fed to the main-body transmitting/receiving means 746 from the battery via a relay box (not shown). A key cylinder 766 opens and shuts the door locking means 722 when turned by the inserted key (not shown), which starts an engine of the car, and is provided near the outer door handle 723 of the door 721, as shown in Fig.32.

Then, an operation and an action of the door opening/ closing system having the above structure will be explained hereunder. As shown in Fig.33(a) and Fig.33(b), when the outer door handle 723 or the inner door handle 724 is grasped and pulled and turned to open the door 721 that closes the main body 720, the lever 734 is pulled up upwardly around the pivot 730 via the outer wire 732 or the inner wire 733, then the L-shaped hook 731 is moved downward as indicated by an arrow and released from the U-shaped holder 729, and the door latching means 725 is released, and then the door 721 can be opened as shown in Fig.34(a).

Then, as shown in Fig.34(b), the piezoelectric element material 736 is deformed to sense the release of the door latching means 725, which is cooperated with the door opening operation, in response to the action of the lever 734 taken until the door latching means 725 is released, and then generates an electric signal. In the main-body side controlling means 728 that captures the electric signal of the piezoelectric element material 736, the door release/latch deciding means 739 senses the release of the door latching means 725 by the door opening operation, and the password request signal is transmitted from the password signal requesting means 757.

The controlling means 756 carried with a door open/close operator when receives the password request signal causes the mobile transmitting/receiving means 758 to transmit the password signal. The main body-side controlling means 728 when receives the password signal causes the decrypting means 759 to decrypt the password signal, then causes the password signal deciding means 761 to decide the password signal, and then causes the lock open/shut controlling means 748 to send out the signal to the lock open/shut driving means 762 when the password signal coincides with the password signal stored in the memory 760. In contrast, when the password signals do not coincide with each other and a disagreement between the password signals is decided in a predetermined number of times or more, the alarm is generated.

In this manner, the main body-side controlling means 728 decides whether or not the door opening/closing operation is made by the normal operator, and controls the operation of the lock open/shut driving means 762 to open the door locking means 722 when the operator is the normal operator.

Also, as shown in Fig.34(a), when the outer door handle 723 is grasped and closed to push the door 721 toward the main body 720 in order to close the door 721 that opens the main body 720 or when the inner door handle 724 is grasped and closed to pull the door 721 toward the main body 720, the cam 735 comes into contact with the U-shaped holder 729 and pushes it upward indicated with an arrow around the pivot 730 and correspondingly the L-shaped hook 731 is latched on the U-shaped holder 729 while turning upward, and then the door 721 closes the main body 720 as shown in Fig.33(a).

Then, as shown in Fig.34(b), the piezoelectric element material 736 is deformed to sense the set of the door latching means 725, which is cooperated with the door closing operation, in response to the action of the lever 734 taken when the door latching means 725 is set, and then generates an electric signal. In the main-body side controlling means 728 that captures the electric signal of the piezoelectric element material 736, the door release/latch deciding means 739 decides that the door is closed. Then, door opening/closing operator deciding means 747 when receives this decision signal decides whether or not the door closing operation is made by the normal operation, in the same way as that in the door opening operation. Then, the lock open/shut controlling means 748 controls the action of the lock open/shut driving means 762 to shut the door locking means 722 when the operator is the normal operation.

Fig.38(a) and Fig.38(b) are diagrams showing a load applied to the piezoelectric element material 736 as the door latch release/set signal sensing means 727 and a signal output characteristic. The applicant has verified a relationship between a load of the piezoelectric element material 736 and a signal output by experiment, with the result that a signal output shows a variation shown in Fig.38(b) when a bending load shown in Fig.38(a) is applied to the piezoelectric element material 736.
(1) When no load is applied to the piezoelectric element material 736 at a time t₀, the signal output shows a voltage Va.
(2) When the bending load is applied to the piezoelectric element material 736 in a predetermined direction at a time t₁, the sensor output is increased to Vb at that moment, then is reversed immediately to 0 (V), and then is returned again to Va.
(3) Then, the signal output still shows Va when the sensor is kept in its bent state.
(4) When the piezoelectric element material 736 is restored to its original state at a time t₃, the sensor output is decreased to Vc at that moment, then is reversed immediately to Vd, and then is returned again to Va.

In this manner, since the piezoelectric element material 736 can sense the output responding to the acceleration with high sensitivity, such sensor can sense an infinitesimal vibration with good precision and output it. In this case, for example, a decision threshold having a predetermined voltage amplitude ΔV from the illustrated voltage Va may be set to sense a load application timing, and it may be decided that a change of load occurs when the sensor output exceeds this decision threshold.

In particular, in the door opening/closing system of the present embodiment, the door latch release/set signal sensing means 727 responds to the action of the door latch release/set operating means 726, which cooperates with the opening/closing operation of the door 721 applied from either of the outer side and the inner side, to generate the signal and then the main-body side controlling means 728 when receives this signal controls the open and shut of the door locking means 722. Therefore, the door opening/closing operation as well as the open and shut of the door lock can be carried out from either of the outer side and the inner side, and thus complication in the door opening/closing operation from either of the outer side and the inner side can be reduced to make the operation easy.

Also, the present embodiment is constructed to sense the door opening/closing operation from either of the outer side and the inner side by one door latch release/set signal sensing means 727, and thus this door latch release/set signal sensing means 727 responds to the action of the door latch release/set operating means, which cooperates with the opening/closing operation of the door 721 applied from either of the outer side and the inner side, to generate the signal. Therefore, this door latch release/set signal sensing means can be used commonly in sensing the door opening/closing operation from either of the outer side and the inner side, and variation in sensing the door opening/closing operation can be eliminated, so that the stable door opening/closing operation can be executed.

Also, in the present embodiment, the door latch release/ set signal sensing means 727 is provided to the position, from which the signal is generated by the action of the lever 734, as the common portion that cooperates with the door opening/ closing operation from either of the outer side and the inner side respectively. Therefore, although the release and set of the door latching means 725 is sensed in answer to the door opening/closing operation from the outer side and the inner side, the door latch release/set signal sensing means 727 can be provided to one location and thus the installation is made simple.

Also, in the present embodiment, the door latch release/ set signal sensing means 727 is provided to the inside of the door 721. Therefore, the inside of the door becomes wide rather than the insides of the inner and outer door handles that are grasped to open/close the door, and the constraints of the installation space can be reduced and the door latch release/set signal sensing means 727 can be easily fitted.

Also, there is no need of an installation of the door latch release/set signal sensing means 727 into the door handle. Therefore, it is not required that a hollow portion of a predetermined size into which the piezoelectric sensor 15 is installed should be provided to the door handle. As a result, a shape or a dimension of the door handle can be designed arbitrarily while attaching importance to the gripping characteristic in operation, the external design, and the like, and thus a margin of design for a shape or a dimension of the door handle is increased.

Also, in the present embodiment, the door latch release/ set signal sensing means 727 is composed of the piezoelectric element material 736 and this piezoelectric element material 736 is arranged to deform in response to the action of the door latch release/set operating means 726 and output the electric signal. Therefore, a sensitivity of the door opening/closing operation applied from either of the outer side and the inner side can be improved, and then respective timings for the release and set of the door latching means 725 and the open and shut of the door locking means 722 by the outer door handle 723 and the inner door handle 724 can be adequately set easily. Thus, the operability of the door opening/closing operation can be improved.

Also, there is no chance to sense the approach of the article irrespective of the door opening/closing operation, or the like by mistake, in contrast to the electrical capacitor type handle operation sensor in the prior art. Accordingly, it can be sensed sharply by setting a sensitivity high whether the opening/closing operation of the door was taken, in response to a slight displacement of the lever 734 that is displaced together with the door latching means 725. Thus, even when the gripping action of the outer door handle 723 and the inner door handle 724 is made weakly in the opening/closing operation of the door 721, it can be sensed without fail whether the opening/closing operation of the door was executed.

Also, the piezoelectric element material 743 does not output the sensed signal unless the piezoelectric element material 743 of the piezoelectric element material 736 is deformed by the displacement behavior of the lever 734 that is displaced together with the door latching means 725. Therefore, emission of the noise to the surrounding environment caused by the useless signal sending-out can be prevented.

Also, since the door latch release/set signal sensing means 727 using the piezoelectric element material 736 can be operated stably under a consumption current of 1 mA or less, a burden of the onboard battery can be reduced by the reduction of the consumption current in contrast to the electrical capacitance type handle operation sensor in the prior art.

Also, the engaging mode between the piezoelectric element material 736 and the lever 734 to generate the deformation in the piezoelectric element material 736 is not limited to the above embodiment.

Also, in the present embodiment, the bended portions 736a to which a tension is applied are provided to the piezoelectric element material 736, and these bended portions 736a are arranged to accept the deformation generated by the action of the door latch release/set operating means 726. Therefore, the bended portions 736a of the piezoelectric element material 736, to which a tension is applied to enhance a sensitivity, are deformed by the action of the door latch release/set operating means 726, and a sensitivity of the door opening/closing operation applied from either of the outer side and the inner side can be enhanced further. Respective timings for the release and set of the door latching means and the open and shut of the door locking means by the outer door handle and the inner door handle can be adequately set easily, and thus the operability of the door opening/closing operation can be improved.

Also, according to the keyless entry system of the present embodiment, the door handle device that can execute a high-sensitivity detection, that is hard to subject to the disturbance caused due to the exposure of the electrodes, and that has few constraint conditions of the installation location is equipped as the major constituent member. Since the door opening/closing device can be operated only by the operation of the outer door handle 723 and the inner door handle 724 and no stroke is needed to joint the contacts, there exists no time difference between a moment at which the door opening/closing operation is executed and a moment at which the door latch release/set signal sensing means starts to operate. As a result, a time required until the lock open/shut controlling means 748 of the main body-side controlling means instructs the door locking means 722 to open or shut after the door opening/closing operation is executed can be reduced substantially, and also the door locking means 722 can be opened and closed in response to the rapid door opening/closing.

Also, in the present embodiment, the lever 730 is used as the common portion that is used to deform the piezoelectric element material 736. But the cam 735 or the L-shaped hook 731 may be employed and the advantages equivalent to those in the present embodiment can be expected at that time.

Also, in the door opening/closing device of the present embodiment, a mode in which the open and shut of the door locking means 722 and are executed simultaneously with the release and set of the door latching means 725 by the door opening/closing operation is explained. But the door opening/closing device by which merely the open of the door locking means is executed simultaneously with the release of the door latching means by the door opening operation applied from either of the outer side and the inner side may be provided. In such door opening/ closing device, the door latch release/set operating means 726 is replaced with a door latch release operating means, the door latch release/set signal sensing means 727 is replaced with a door latch release signal sensing means, the door release/latch deciding means 739 is replaced with a door release deciding means, and the door opening/closing operator deciding means 747 is replaced with a door opening operator deciding means.

Then, the door latch release signal sensing means responds to the action of the door latch release operating means, which cooperates with the door opening operation applied from either of the outer side and the inner side, to generate the signal and then the main-body side controlling means when receives this signal controls the open of the door locking means. Therefore, the door opening operation as well as the open of the door lock can be carried out from either of the outer side and the inner side. Therefore, complication in the door opening operation from either of the outer side and the inner side can be reduced rather than the prior art to make the operation easy, and also the advantages equivalent to those in the present embodiment in the door opening operation can be expected.

Also, a mode in which the door opening/closing device of the present embodiment in installed into the car is explained. But the door opening/closing device of the present embodiment may be employed in a house, a warehouse, an industrial-use refrigerator, a vessel, a airplane, or the like, of which the operator goes in and out by opening/closing the door from either of the outer side and the inner side, a safe whose door is opened/closed only from the outer side, or the like.

Also, the door opening/closing device of the present embodiment is constructed such that the piezoelectric element material 736 is deformed by the lever 730 or the cam 735 or the L-shaped hook 731 as the common portion, which cooperates with the operation of the outer door handle 723 and the inner door handle 724 used to open/close the door 721, to get an acceleration. But the vibration caused by pulling or pushing or touching the outer door handle 723 and the inner door handle 724 may be sensed by the piezoelectric element material 736 via the lever 730 or the cam 735 or the L-shaped hook 731 acting as the common portion.

The present invention is explained in detail with reference to particular embodiments. But it is obvious for the person skilled in the art that various variations and modifications can be applied without departing from a spirit and a scope of the present invention.

This application is made based upon Japanese Patent Application No.2003-334874, filed on September 26, 2003 and Japanese Patent Application No.2004-255224, filed on September 2, 2004, and the contents thereof are incorporated herein by reference.

### <Industrial Applicability>

As described above, the door opening/closing device according to the present invention can also open or open and shut the door lock by the door opening operation or the door opening/closing operation applied from either of the outer side and the inner side, the door opening/closing operation of the user can be facilitated, and the door opening/closing device of the present invention can be applied to the car, the house, the warehouse, the business refrigerator, the vessel, the airplane, the safe, or the like.

## Claims

1. A door handle device that is able to open a lock of a door locking means, which is provided to a door with a handle used for an opening/closing operation to lock an opening operation of the door, by an operation of the handle, comprising:
a piezoelectric sensor formed of a piezoelectric element fitted to the handle and having a flexibility; and
a controlling portion for receiving a sensed signal of the piezoelectric sensor generated by a touch on the handle to open the lock of the door locking means.

2. A door handle device according to claim 1, wherein the handle has a handle main body one end side of which is supported swingably to the door via a supporting shaft and other end side of which is moved in a pulling-out direction by a swing of one end side, and
the piezoelectric sensor is arranged on a surface of the handle main body opposing to the door to sense a vibration generated by a gripping operation of the handle main body.

3. A door handle device according to claim 1, wherein the handle has a handle main body one end side of which is supported swingably to the door via a supporting shaft and other end side of which is moved in a pulling-out direction by a swing of one end side, and
the piezoelectric sensor is bridged between the door and other end side of the handle main body to sense a vibration generated by a pulling operation of the handle main body.

4. A door handle device according to claim 1, wherein the handle has a handle main body one end side of which is supported swingably to the door via a supporting shaft and other end side of which is moved in a pulling-out direction by a swing of one end side, and
the piezoelectric sensor is arranged in vicinity of the supporting shaft of the handle main body to sense a vibration generated by a swing operation of the handle main body.

5. A door handle device according to claim 1, wherein the handle has a handle main body one end side of which is supported swingably to the door via a supporting shaft and other end side of which is moved in a pulling-out direction by a swing of one end side, and
the piezoelectric sensor is bridges between the door and one end side of the handle main body to contact the supporting shaft and a top end of the piezoelectric sensor is inserted into an insertion hole formed in the handle main body as a free end.

6. A door handle device according to claim 1, wherein the handle is a door-integrated handle having a handle main body both ends of which are fixed to the door.

7. A door handle device according to any one of claim 2 to claim 6, wherein the piezoelectric sensor is provided in an inside of the handle main body.

8. A door handle device according to any one of claim 2 to claim 6, wherein the piezoelectric sensor is provided along an inner surface of the handle main body.

9. A door handle device according to any one of claim 2 to claim 6, wherein the handle is arranged in a position that is hidden behind an outer surface of the door when the door locking means is shut and is exposed when the door locking means is opened.

10. A keyless entry system comprising:
the door handle device set forth in any one of claim 1 to claim 9;
a vehicle-side transmitter/receiver mounted on a vehicle side;
a mobile-side transmitter/receiver carried with an operator; and
a controlling portion for opening a door lock when the mobile-side transmitter/receiver receives a password request signal that the vehicle-side transmitter/receiver transmits and then the vehicle-side transmitter/receiver receives a password signal that the mobile-side transmitter/receiver transmits;
wherein the control portion includes
a password signal requesting means for receiving a sensed signal of the piezoelectric sensor to cause the vehicle-side transmitter/receiver to transmit the password request signal,
a password signal deciding means for deciding whether or not the password signal received by the vehicle-side transmitter/receiver and decrypted coincides with a normal signal set previously, and
a lock open instructing means for instructing the door locking means to open the lock when the password signal coincides with the normal signal.

11. A keyless entry system comprising:
the door handle device set forth in any one of claim 1 to claim 9;
wherein the control portion includes
a password signal inputting means for receiving a touch detect signal from the piezoelectric sensor to standby an input of a password signal,
a password signal deciding means for deciding whether or not the password signal input into the password signal inputting means from the piezoelectric sensor and decrypted coincides with a normal signal set previously, and
a lock open instructing means for instructing the door locking means to open the lock when the password signal coincides with the normal signal.

12. A keyless entry system according to claim 11, wherein the password signal is set based on a peak intensity and a peak interval of a vibration waveform generated by a rapping operation in a predetermined rhythm.

13. A keyless entry system according to claim 11, wherein the password signal is set based on a peak intensity and a peak interval of a pressure change waveform generated by a variation of a gripping pressure.

14. A keyless entry system according to claim 12 or claim 13, further comprising:
a disturbance sensor for sensing signal components except a signal as a sensed object out of a sensed signal of the piezoelectric sensor.

15. A door opening/closing device comprising:
an outer door handle and an inner door handle gripped in a door opening/closing operation;
a door locking means for locking a door not to be opened from a main body on which the door is closed;
a door latching means for latching the door releasably from the main body;
a door latch release operating means for releasing a latch of the door latching means in cooperation with an operation that is applied from an outer side or an inner side to open the door;
a door latch release signal sensing means for generating a signal in response to an operation of the door latch release operating means; and
a main body-side controlling means for controlling an open of the door locking means by a sensed signal of the door latch release signal sensing means.

16. A door opening/closing device comprising:
an outer door handle and an inner door handle gripped in a door opening/closing operation;
a door locking means for locking a door not to be opened;
a door latching means for latching the door releasably from a main body;
a door latch release/set operating means for releasing and setting the door latching means in cooperation with an operation that is applied from an outer side or an inner side to open/close the door;
a door latch release/set signal sensing means for generating a signal in response to an operation of the door latch release/set operating means; and
a main body-side controlling means for controlling an open and a shut of the door locking means by a sensed signal of the door latch release/set signal sensing means.

17. A door opening/closing device according to claim 15 or claim 16, wherein the door latch release signal sensing means or the door latch release/set signal sensing means senses solely a door opening operation or door opening/closing operation applied from an outer side or an inner side.

18. A door opening/closing device according to any one of claim 15 to claim 17, wherein the door latch release signal sensing means or the door latch release/set signal sensing means is provided to a position from which a signal is generated by an action of a common portion that cooperates with a door opening operation applied from an outer side or an inner side by the door latch release operating means or a door opening/closing operation applied from the outer side or the inner side by the door latch release/set operating means respectively.

19. A door opening/closing device according to any one of claim 15 to claim 18, wherein the door latch release signal sensing means or the door latch release/set signal sensing means is provided in an inside of a door.

20. A door opening/closing device according to any one of claim 15 to claim 19, wherein the door latch release signal sensing means or the door latch release/set signal sensing means is formed of a piezoelectric element material, and the piezoelectric element material is deformed by an action of the door latch release operating means or the door latch release/set operating means to output an electric signal.

21. A door opening/closing device according to claim 20, wherein a bended portion to which a tension is applied is provided to the piezoelectric element material, and the bended portion is arranged to receive a deformation by an action of the door latch release operating means or the door latch release/set operating means.

22. A keyless entry system according to any one of claim 15 to claim 21, wherein the main body-side controlling means includes
a main-body transmitting/receiving means,
a password signal requesting means for receiving a sensed signal of the door latch release signal sensing means or the door latch release/set signal sensing means and then requesting a controlling means carried with a door opening/closing operator to transmit a password requesting signal via the main-body transmitting/receiving means,
a door opening/closing operator deciding means for deciding whether or not a password signal transmitted from the controlling means carried with the door opening/closing operator and decrypted coincides with a normal signal set previously, and
a lock open controlling means or a lock open/shut controlling means for controlling a open or open/shut of a door locking means when the password signal is normal.

23. A vehicle door equipped with the keyless entry system set forth in claim 22.

24. A building door equipped with the keyless entry system set forth in claim 22.
